# EUROPEAN PATENT SPECIFICATION

(11) **EP 1 929 863 B1**
(45) Date of publication and mention of the grant of the patent: **09.11.2016**
(21) Application number: 06024444.9
(22) Date of filing: 29.09.1999
(51) Int. Cl.: A01N 1/02

(54) **Apparatus and method for maintaining and/or restoring viability of organs**
Vorrichtung und Verfahren zur Erhaltung und/oder Wiederherstellung der Lebensfähigkeit von Organen
Appareil et procédé pour maintenir et/ou restaurer la viabilité d'organes

(30) Priority: 29.09.1998 US 162128
(43) Date of publication of application: 11.06.2008
(62) Divisional of application: 99949991.6
(73) Proprietor: Organ Recovery Systems, Inc., Des Plaines, IL 60018 (US)
(72) Inventor: Owen, Donald, R., Harahan, LA 70123 (US); Kravitz, David, C., Des Plaines, IL 60618 (US)
(74) Representative: Delorme, Nicolas

(56) References cited:
- EP-A- 0 376 763
- WO-A-94/06292
- WO-A-96/29865
- WO-A-97/46091
- US-A- 4 231 354
- US-A- 5 051 352
- US-A- 5 326 706
- US-A- 5 699 793

## Description

### BACKGROUND OF THE INVENTION

### 1. Field of Invention

The invention relates a control system for controlling perfusion, a method of controlling perfusion and a recording medium that stores a control program for use by a perfusion system.

### 2. Description of Related Art

Preservation of organs by machine perfusion has been accomplished at hypothermic temperatures with or without computer control with crystalloid perfusates and without oxygenation. See, for example, U.S. Patent Nos. 5,149,321, 5,395,314, 5,584,804, 5,709,654 and 5,752,929 and U.S. Patent Application No. 08/484,601 to Klatz et al., which are hereby incorporated by reference. Hypothermic temperatures provide a decrease in organ metabolism, lower the energy requirements, delay the depletion of high energy phosphate reserves and accumulation of lactic acid and retard the morphological and functional deterioration associated with disruption of blood supply. Oxygen can not be utilized efficiently by mitochondria below approximately 20°C to produce energy and the reduction in catalase/superoxide dismutase production and ascorbyl and glutathione regeneration at low temperatures allows high free radical formation. The removal of oxygen from perfusates during low temperature machine perfusion has even proven helpful in improving organ transplant results by some investigators.

Reduction in potential oxygen damage is also accomplished via the addition of antioxidants to the perfusate. In particular, this has proven useful in reducing organ damage after long warm ischemia times. Numerous other perfusate additives have also been reported to improve the outcome of machine perfusion.

Ideally organs would be procured in a manner which limits their warm ischemia time to essentially zero. Unfortunately, in reality, many organs, especially from non-beating heart donors, are procured after extended warm ischemia time periods (i.e. 45 minutes or more). The machine perfusion of these organs at low temperature has demonstrated significant improvement (Transpl Int 1996 Daemen). Further, prior art teaches that the low temperature machine perfusion of organs is preferred at low pressures (Transpl. Int 1996 Yland) with roller or diaphragm pumps delivering the perfusate at a controlled pressure. Numerous control circuits and pumping configurations have been utilized to achieve this objective and to machine perfuse organs in general. See, for example, U.S. Patents Nos. 5,338,662 and 5,494,822 to Sadri (= WO 94/06292); U.S. Patent No. 4,745,759 to Bauer et al.; U.S. Patents Nos. 5,217,860 and 5,472,876 to Faby et al.; U.S. Patent No. 5,051,352 to Mertindale et al.; U.S. Patent No. 3,995,444 to Clark et al.; U.S. Patent No. 4,629,686 to Gruenberg; U.S. Patents Nos. 3,738,914 and 3,892,628 to Thorne et al.; U.S. Patents Nos. 5,285,657 and 5,476,763 to Bacchi et al.; U.S. Patent No. 5,157,930 to McGhee et al.; and U.S Patent No. 5,141,847 to Sugimachi et al. However, the use of such pumps for machine perfusion of organs increases the risk of overpressurization of the organ should the organ perfusion apparatus malfunction. High pressure perfusion (e.g., above about 60 mm Hg) can wash off the vascular endothelial lining of the organ and in general damages organ tissue, in particular at hypothermic temperatures where the organ does not have the neurological or endocrinal connections to protect itself by dilating its vasculature under high pressure.

Furthermore, the techniques used for assessment of the viability of these machine perfused organs have been a critical factor in limiting the organs from greater use. While increased organ resistance (i.e., pressure/flow) measurements during machine perfusion are a useful indicator, they demonstrate only the worst case situations.

During the low temperature machine perfusion of organs which have been damaged by warm ischemia time or by the machine perfusion itself, the organs will elute intracellular and endothethial as well as membrane constituents. Over the years the appearance of various ubiquitous intracellular enzymes, such as lactic dehydrogenase (LDH) and alkaline phosphatase, in the perfusate has been used as a biomarker of organ damage. Recently, the determination of the presence of alpha glutathione-S-transferase (a-GST) and Pi glutathione-S-transferase (p-GST) in low temperature machine perfusion perfusates has proven a satisfactory indicator in predicting the functional outcome of non-beating heart donor kidney grafts before transplantation (Transpl 1997 Daemen).

The prior art has also addressed the need to restore or maintain an organ's physiological function after preservation for an extended period of time at hypothermic temperatures. In particular, U.S. Patent No. 5,066,578 to Wikman-Coffelt discloses an organ preservation solution that contains large amounts of pyruvate. Wikman-Coffelt teaches that flooding of the organ with pyruvate bypasses glycosis, the step in the cell energy cycle that utilizes adenosine triphosphate (ATP) to produce pyruvate, and pyruvate is then available to the mitochondria for oxidative phosphorylation producing ATP. Wikman-Coffelt teaches perfusing or washing an organ at a warm temperature with a first preservation solution containing pyruvate for removal of blood or other debris from the organ's vessels and to vasodilate, increase flow and load the cells with an energy supply in the form of a clean substrate, namely the pyruvate. Wikman-Coffelt teaches that the pyruvate prevents edema, ischemia, calcium overload and acidosis as well as helps preserve the action potential across the cell membrane. The organ is then perfused with a second perfusion solution containing pyruvate and a small percentage of ethanol in order to stop the organ from working, vasodilate the blood vessels allowing for full vascular flow, continue to load the cells with pyruvate and preserve the energy state of the organ. Finally the organ is stored in a large volume of the first solution for 24 hours or longer at temperatures between 4°C and 10°C.

However, the mitochondria are the source of energy in cells and need significant amounts of oxygen to function. Organs naturally have significant pyruvate levels, and providing an organ with additional pyruvate will not assist in restoring and/or maintaining an organ's full physiological function if the mitochondria are not provided with sufficient oxygen to function. Further, briefly flooding an organ with pyruvate may, in fact, facilitate tearing off of the vascular endothelial lining of the organ.

U.S. Patent No. 5,599,659 to Brasile et al. also discloses a preservation solution for warm preservation of tissues, explants, organs and endothelial cells. Brasile et al. teach disadvantages of cold organ storage, and proposed warm preservation technology as an alternative. Brasile et al. teach that the solution has an enhanced ability to serve as a medium for the culture of vascular endothelium of tissue, and as a solution for organs for transplantation using a warm preservation technology because it is supplemented with serum albumin as a source of protein and colloid; trace elements to potentiate viability and cellular function; pyruvate and adenosine for oxidative phosphorylation support; transferrin as an attachment factor;

From document WO 94/06292 a method is known in which an operator may select a method of perfusion control among perfusion pressure and perfusate flow rate. insulin and sugars for metabolic support and glutathione to scavenge toxic free radicals as well as a source of impermeant; cyclodextrin as a source of impermeant, scavenger, and potentiator of cell attachment and growth factors; a high Mg++ concentration for microvessel metabolism support; mucopolysaccharides, comprising primarily chondroitin sulfates and heparin sulfates, for growth factor potentiation and hemostasis; and ENDO GRO™ as a source of cooloid, impermeant and specific vascular growth promoters. Brasile et al. further teach warm perfusing an organ for up to 12 hours at 30°C, or merely storing the organ at temperatures of 25°C in the preservation solution.

If is also known from document WO96/29865 a computer-based organ perfusion apparatus that permits organ viability to be evaluated based on-line measurements of physiological performance. In document US5051352 is disclosed an apparatus for maintaining the viability of animal organs by controlling the storage temperature of the organ and providing the organ with sufficient nutrients and oxvaen. The document US5326706 discloses a homeostatic organ preservations system that has pump control circuit that is responsive to a decrease or an increase in organ vascular resistance.

Document US4231354 depicts a perfusion device for circulating blood within living tissue under automatic control.

However, flooding an organ with such chemicals is insufficient to arrest or repair ischemic injury where the mitochondria are not provided with sufficient oxygen to function to produce energy. The oxygen needs of an organ at more than 20°C are substantial and cannot be met by a simple crystalloid at reasonable flows. Further, assessment of the viability of an organ is necessary before the use of any type of solution can be determined to have been fruitful.

### SUMMARY OF THE INVENTION

The invention is directed to a control system for controlling perfusion to at least one organ with a medical fluid, a method of controlling said perfusion, and a recording medium that stores a control program for use by a perfusion system that perfuses at least one organ with a medical fluid. For a better understanding, an apparatus for organ perfusion and the method of perfusion is described below. The organ perfusion apparatus and method monitor, sustain and/or restore organ viability by perfusing the organ at normothermic temperatures (normothermic perfusion mode) preferably prior to and followed by organ perfusion at hypothermic temperatures (hypothermic perfusion mode) for transport and/or storage of the organ.

The restoring of organ viability may be accomplished by restoring high energy nucleotide (e.g., adenosine triphosphate (ATP)) levels and enzyme levels in the organ which were reduced by warm ischemia time by perfusing the organ with an oxygenated medical fluid, such as an oxygenated cross-linked hemoglobin-based bicarbonate medical fluid, at normothermic or near-normothermic temperatures. The organ may be flushed with a medical fluid prior to perfusion with the oxygenated medical fluid. Such perfusion can be performed at either normothermic or hypothermic temperatures. The medical fluid preferably contains little or no oxygen and preferably includes antioxidants, both molecular (e.g., 2-ascorbic acid tocopherol) and enzymatic (e.g., catalase and superoxide dismutase (SOD)). Normothermic perfusion can be performed in vivo as well as in vitro. Such perfusion arrests or repairs ischemic injury in preparation of transport, storage and/or transplant of the organ.

In the normothermic perfusion mode, gross organ perfusion pressure is preferably provided by a pneumatically pressurized medical fluid reservoir controlled in response to a sensor disposed in an end of tubing placed in the organ, which may be used in combination with a stepping motor/cam valve or pinch valve which provides for perfusion pressure fine tuning, prevents overpressurization and/or provides emergency flow cut-off. Substantially eliminating overpressurization prevents and/or reduces damage to the vascular endothelial lining and to the organ tissue in general. Viability of the organ may be monitored, preferably automatically, in the normothermic perfusion mode, preferably by monitoring organ resistance (pressure/flow) and/or pH, pO₂, pCO₂, LDH, T/GST and Tprotein levels in the medical fluid that has been perfused through the organ and collected.

Normothermic perfusion may be followed by hypothermic perfusion. In the hypothermic mode, the organ is perfused with a medical fluid containing substantially no oxygen, preferably a simple crystalloid solution preferably augmented with antioxidants, intermittently or at a slow continuous flow rate. Hypothermic perfusion also can be performed in vivo as well as in vitro. Hypothermic perfusion reduces the organ's metabolic rate allowing the organ to be preserved for extended periods of time. The medical fluid is preferably fed into the organ by gravity from an intermediary tank which has a low pressure head so overpressurization of the organ is avoided. Substantially eliminating overpressurization prevents or reduces damage to the vascular endothelial lining of the organ and to the organ tissue in general, in particular at hypothermic temperatures when the organ has less ability to protect itself by vascular constriction. Viability of the organ may also be monitored, preferably automatically, during the recovery process, preferably by monitoring organ resistance (pressure/flow) and/or pH, pO₂, pCO₂, LDH, T/GST and Tprotein levels in the medical fluid that has been perfused through the organ and collected.

This invention includes a control system for automatically controlling perfusion of one or more organs by selecting between perfusion modes and control parameters. Automatic perfusion may be based on sensed conditions in the system or manually input parameters. The system may be preprogrammed or programmed during use. Default values and viability checks are utilized.

### BRIEF DESCRIPTION OF THE DRAWINGS

These and other aspects and advantages of the invention will become apparent from the following detailed description of embodiments when taken in conjunction with the accompanying drawings, in which:
Fig. 1 is an organ perfusion apparatus that is not part of invention;
Fig. 2 is a schematic diagram of the apparatus of Fig. 1;
Fig. 3 is a diagram of the electronics of the apparatus of Fig. 1;
Fig. 4 is an exploded view of a first pump module of a combined pump, filtration, oxygenation and/or debubbler apparatus;
Fig. 5 is an exploded view of a filtration module of a combined pump, filtration, oxygenation and/or debubbler apparatus;
Fig. 6 is an exploded view of an oxygenation module of a combined pump, filtration, oxygenation and/or debubbler apparatus;
Fig. 7 is an exploded view of a debubbler module of a combined pump, filtration, oxygenation and/or debubbler apparatus;
Fig. 8 is an exploded view of a second pump module of a combined pump, filtration, oxygenation and/or debubbler apparatus;
Fig. 9 is an exploded perspective view showing the modules of Figs. 4-8 assembled together;
Fig. 10 is a front perspective view of an assembled modular combined pump, filtration, oxygenation and/or debubbler apparatus ;
Figs. 11A - 11D show side perspective views of various possible examples of an organ cassette;
Fig. 12 is an organ perfusion apparatus configured to simultaneously perfuse multiple organs;
Figs. 13A and 13B show a stepping motor/cam valve ;
Figs. 14A - 14F show another stepping motor/cam valve; and
Fig. 15 shows a block diagram that schematically illustrates the control system according to the invention.

### DETAILED DESCRIPTION OF PREFERRED EMBODIMENTS

For a general understanding of the features of the invention, reference is made to the drawings. In the drawings, like reference numerals have been used throughout to designate like elements.

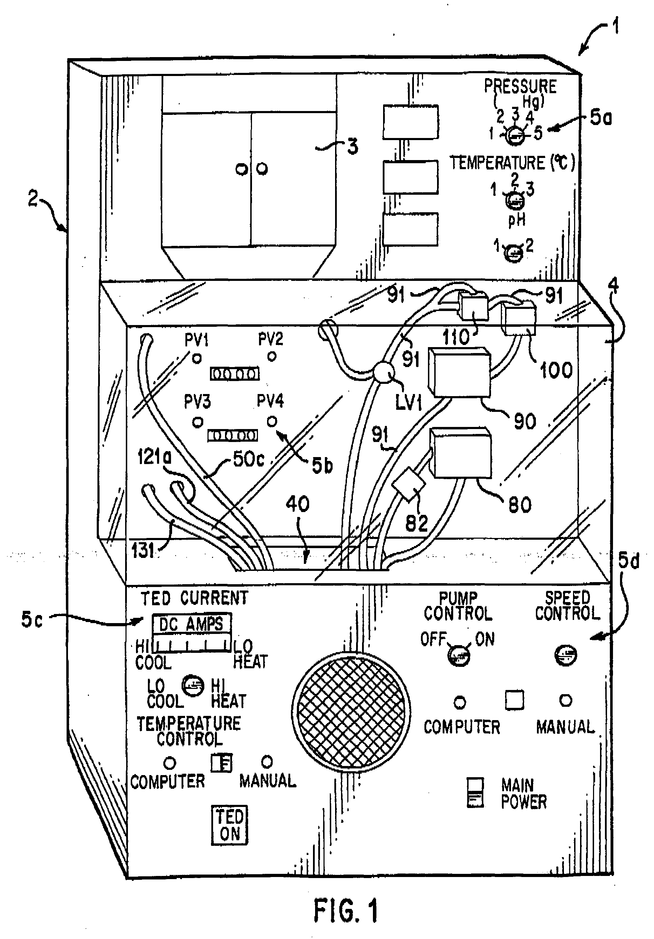

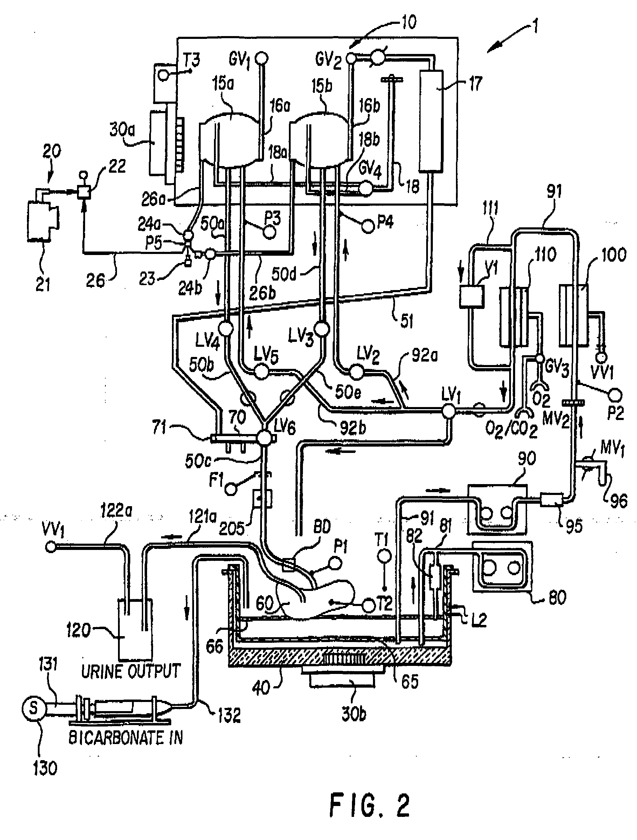

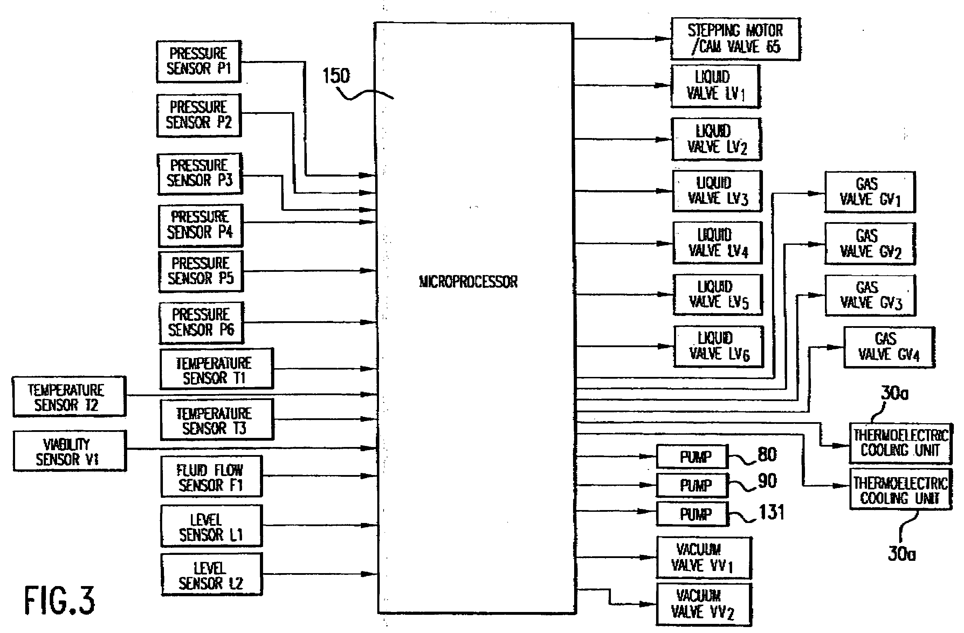

Figure 1 shows an organ perfusion apparatus 1. Figure 2 is a schematic illustration of the apparatus of Fig. 1. The apparatus 1 is preferably at least partially microprocessor controlled, and pneumatically actuated. The microprocessor 150 connection to the sensors, valves, thermoelectric units and pumps of the apparatus 1 is schematically shown in Fig. 3.

The organ perfusion apparatus 1 is capable of perfusing one or more organs simultaneously, at both normothermic and hypothermic temperatures (hereinafter, normothermic and hypothermic perfusion modes). All medical fluid contact surfaces are preferably formed of or coated with materials compatible with the medical fluid used, more preferably non-thrombogenic materials. As shown in Fig. 1, the apparatus 1 includes a housing 2 which includes front cover 4, which is preferably translucent, and a reservoir access door 3. The apparatus preferably has one or more control and display areas 5a, 5b, 5c, 5d for monitoring and controlling perfusion.

As schematically shown in Fig. 2, enclosed within the housing 2 is a reservoir 10 which preferably includes three reservoir tanks 15a, 15b, 17. Two of the reservoir tanks 15a, 15b are preferably standard one liter infusion bags, each with a respective pressure cuff 16a, 16b. A pressure source 20 can be provided for pressurizing the pressure cuffs 16a, 16b. The pressure source 20 is preferably pneumatic and may be an on board compressor unit 21 supplying at least 10 LPM external cuff activation via gas tubes 26,26a,26b, as shown in Fig. 2.

Any adequate pressure source other than board compressor unit can be employed, for example, a compressed gas (e.g., air, CO₂, oxygen, nitrogen, etc.) tank (not shown) preferably with a tank volume of 1.5 liters at 100 psi or greater for internal pressurization. Alternatively, an internally pressurized reservoir tank (not shown) may be used.

Gas valves 22-23 are provided on the gas tube 26 to allow for control of the pressure provided by the onboard compressor unit 21. Anti-back flow valves 24a, 24b may be provided respectively on the gas tubes 26a, 26b. Pressure sensors P5, P6 may be provided respectively on the gas tubes 26a, 26b to relay conditions therein to the microprocessor 150, shown in Fig. 3. Gas valves GV₁ and GV₂ may be provided to release pressure from the cuffs 16a, 16b. One or both of gas valves GV₁ and GV₂ may be vented to the atmosphere. Gas valve GV₄ in communication with reservoir tanks 15a, 15b via tubing 18a, 18b may be provided to vent air from the reservoir tanks 15a, 15b through tubing 18. The third reservoir tank 17 is preferably pressurized by pressure released from one of the pressure cuffs via gas valve GV₂.

The medical fluid may, for example, be a simple crystalloid solution, or may be augmented with an appropriate oxygen carrier. The oxygen carrier may, for example, be washed, stabilized red blood cells, cross-linked hemoglobin, pegolated hemoglobin or fluorocarbon based emulsions. The medical fluid may also contain antioxidants known to reduce peroxidation or free radical damage in the physiological environment and specific agents known to aid in tissue protection. As discussed in detail below, an oxygenated (e.g., cross-linked hemoglobin-based bicarbonate) solution is preferred for the normothermic mode while a non-oxygenated (e.g., simple crystalloid solution preferably augmented with antioxidants) is preferred for the hypothermic mode. The specific medical fluids used in both the normothermic and hypothermic modes are designed to prevent the washing away of or damage to the vascular endothelial lining of the organ.

The perfusion solution may be provided in a perfusion solution kit, for example, a saleable package preferably containing at least one first container holding a first perfusion solution for normothermic perfusion and at least one second container holding a second, different perfusion solution for hypothermic perfusion, optionally the box 10 shown in Fig. 2. The first perfusion solution may contain at least one oxygen carrier, may be oxygenated and/or may be selected from the group consisting of a cross-linked hemoglobin and stabilized red blood cells. The second perfusion solution may be non-oxygenated, may contain at least one anti-oxidant, and/or may contain at least one vasodilator. Additionally, the solution may contain no more than 5 mM of dissolved pyruvate salt. Also, the first container and the second container may be configured to be operably connected to a perfusion machine as perfusion fluid reservoirs in fluid communication with perfusate conduits of said perfusion machine. Further, one of the first and second containers may be compressible to apply pressure to the perfusion solution therein. Furthermore, at least one of the first and second containers may include a first opening for passage of a contained perfusion solution out of the container and a second opening passage of a compressed gas into the container. The package may be a cassette configured to be operably connected to a perfusion machine for connection of the first and second containers within the cassette in fluid communication with perfusate conduits or tubing of the perfusion machine.

The medical fluid within reservoir 10 is preferably brought to a predetermined temperature by a first thermoelectric unit 30a in heat transfer communication with the reservoir 10. A temperature sensor T3 relays the temperature within the reservoir 10 to the microprocessor 150, which adjusts the thermoelectric unit 30a to maintain a desired temperature within the reservoir 10 and/or displays the temperature on a control and display areas 5a for manual adjustment. Alternatively or in addition, and preferably where the organ perfusion device is going to be transported, the medical fluid within the hypothermic perfusion fluid reservoir can be cooled utilizing a cryogenic fluid heat exchanger apparatus such as that disclosed in co-pending application Serial No. 09/039,443, which is hereby incorporated by reference.

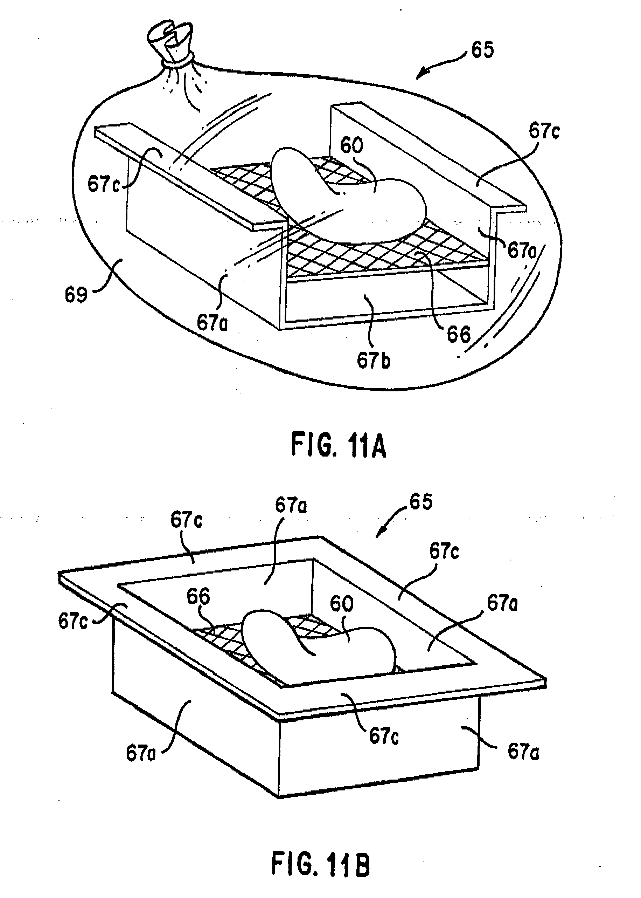

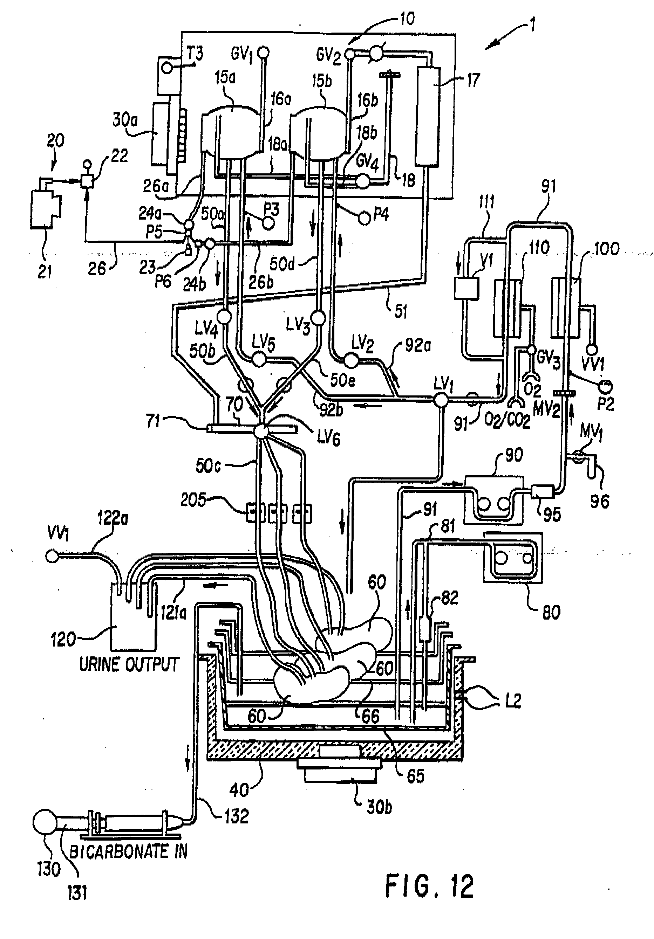

An organ chamber 40 is provided which supports a cassette 65, as shown in Fig. 2, which holds an organ to be perfused, or a plurality of cassettes 65,65,65, as shown in Fig. 12, preferably disposed one adjacent the other. Various embodiments of the cassette 65 are shown in Figs. 11A-11D. The cassette 65 is preferably formed of a material that is light but durable so that the cassette 65 is highly portable. The material may also be transparent to allow visual inspection of the organ.

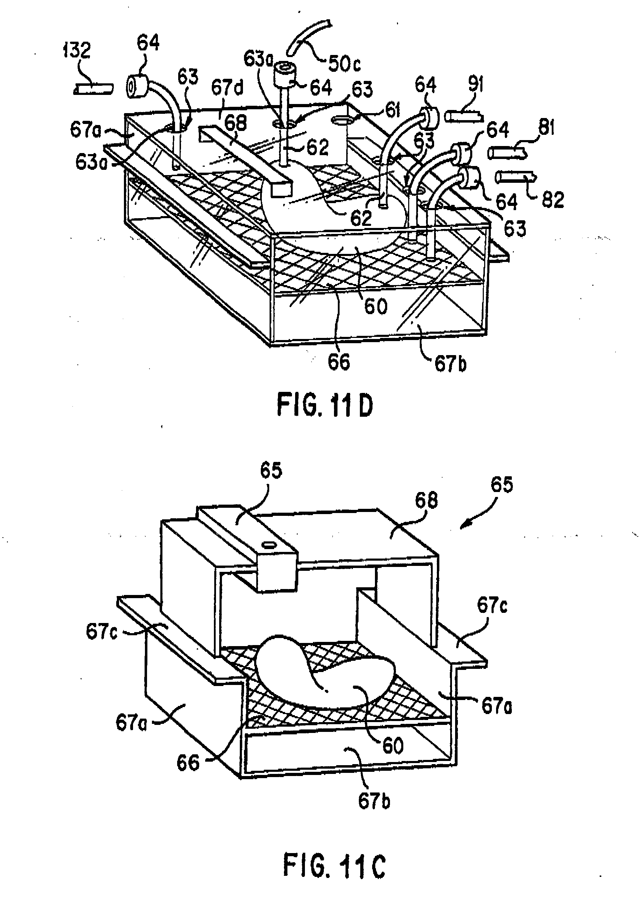

Preferably the cassette 65 includes side walls 67a, a bottom wall 67b and an organ supporting surface 66, which is preferably formed of a porous or mesh material to allow fluids to pass therethrough. The cassette 65 may also include a top 67d and may be provided with an opening(s) 63 for tubing (see, for example, Fig. 11D). The opening(s) 63 may include seals 63a (e.g., septum seals or o-ring seals) and optionally be provided with plugs (not shown) to prevent contamination of the organ and maintain a sterile environment. Also, the cassette 65 may be provided with a closable air vent 61 (see, for example, Fig. 11D). Additionally, the cassette 65 may be provided with tubing for connection to the organ or to remove medical fluid from the organ bath and a connection device(s) 64 for connecting the tubing to, for example, tubing 50c, 81, 82, 91 and/or 132 (see, for example, Fig. 11D). The cassette 65, and more particularly the organ support, opening(s), tubing(s) and/or connection(s), may be specifically tailored to the type of organ and/or size of organ to be perfused. Outer edges 67c of the side support walls 67a can be used to support the cassette 65 disposed in the organ chamber 40. The cassette 65 may further include a handle portion 68 which allows the cassette 65 to be easily handled, as shown, for example, in Figs. 11C and 11D. Each cassette 65 may also be provided with its own stepping motor/cam valve 65 (for example, in the handle portion 68, as shown in Fig. 11C) for fine tuning the pressure of medical fluid perfused into the organ 60 disposed therein, discussed in more detail below. The cassette 65 is configured such that it may be removed from the organ perfusion apparatus 1 and transported to another organ perfusion apparatus in a portable transport apparatus, such as, for example, a conventional cooler or a portable container such as that disclosed in simultaneously filed co-pending U.S. Application No. 09/161,919, which is hereby incorporated by reference.

When transported, the organ is disposed on the organ supporting surface 66 and the cassette 65 is preferably enclosed in a preferably sterile bag 69, as shown, for example, in Fig. 11A. When the organ is perfused with medical fluid, effluent medical fluid collects in the bag 69 to form an organ bath. Alternatively, the cassette 65 can be formed with a fluid tight lower portion in which the effluent medical fluid may collect, or the effluent medical fluid may collect in the organ chamber 40 to form the organ bath. In either alternative case, the bag 69 would preferably be removed prior to inserting the cassette into the organ chamber 40. Further, where a plurality of organs are to be perfused, an organ chamber may be provided for each organ.

The organ bath is preferably cooled to a predetermined temperature by a second thermoelectric unit 30b in heat transfer communication with the organ chamber 40. Alternatively and preferably where the organ perfusion device is going to be transported, the medical fluid within reservoir 10 can be cooled utilizing a cryogenic fluid heat exchanger apparatus such as that disclosed in co-pending application Serial No. 09/039,443, which is hereby incorporated by reference. A temperature sensor T2 within the organ chamber 40 relays the temperature of the organ 60 to the microprocessor 150, which adjusts the thermoelectric unit 30b to maintain a desired organ temperature and/or displays the temperature on the control and display areas 5c for manual adjustment.

Medical fluid may be fed from the bag 15a directly to an organ 60 disposed in the organ chamber 40 through tubing 50a,50b,50c or from bag 15b through tubing 50d,50e,50c by opening valve LV₄ or LV₃, respectively. Conventional medical fluid bag and tubing connections are utilized. All tubing is disposable, easily replaceable and interchangeable. Further, all tubing is formed of or coated with materials compatible with the medical fluids used, more preferably non-thrombogenic materials. An end of the tubing 50c is inserted into the organ 60. The tubing is connected to the organ(s) with conventional methods, for example, with sutures. The tubing may include a lip to facilitate connection to the organ. However, the specific methods and connection depend on the type of organs(s) to be perfused.

The microprocessor 150 preferably controls the pressure source 20 in response to signals from the pressure sensor P1 to control the pressure of the medical fluid fed into the organ 60. The microprocessor 150 may display the pressure on the control and display areas 5a, optionally for manual adjustment. A fluid flow monitor F1 may also be provided on the tubing 50c to monitor the flow of medical fluid entering the organ 60 to indicate, for example, whether there are any leaks present in the organ.

Alternatively, the medical fluid may be fed from the reservoir tank 17 via tubing 51 info an intermediary tank 70 preferably having a pressure head of approximately 5 to 40 mm Hg. Medical fluid is then fed by gravity from the intermediary tank 70 to the organ 60 along tubing 50c by activating a valve LV₆. A level sensor 71 is provided in the intermediary tank 70 in order to maintain the pressure head. Where a plurality of organ chambers 40 and organs 60 are provided, the organs 60 are connected in parallel to the reservoir 10 utilizing suitable tubing duplicative of that shown in Fig. 2. See, for example, Fig. 12. The use of pneumatically pressurized and gravity fed fluid pumps configured to avoid overpressurization even in cases of system failure prevents general tissue damage to the organ and the washing away of or damage to the vascular endothelial lining of the organ. Thus, organ perfusion in this system can be performed with either hydrostatic perfusion (gravity fed flow) or peristaltic perfusion by introducing flow to the organ from a peristaltic (roller) pump.

A bubble detection system may be installed to sense bubbles in the perfusate. An air sensor and sensor board are preferably used. The output of the sensor activates a debubbler system, such as an open solenoid valve, to rid bubbles from the perfusate flow prior to organ introduction. As with all of the sensors and detectors in this system, the bubble detector may be positioned at any point in the system that is effective based on the particular parameters or design characteristics of the system. For example, a bubble detector and debubbler system BD may be positioned between the cam valve 205 and pressure sensor P1, as shown in Fig. 1.

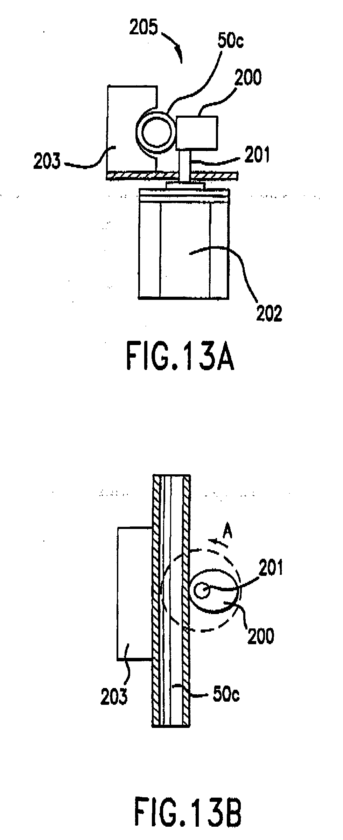

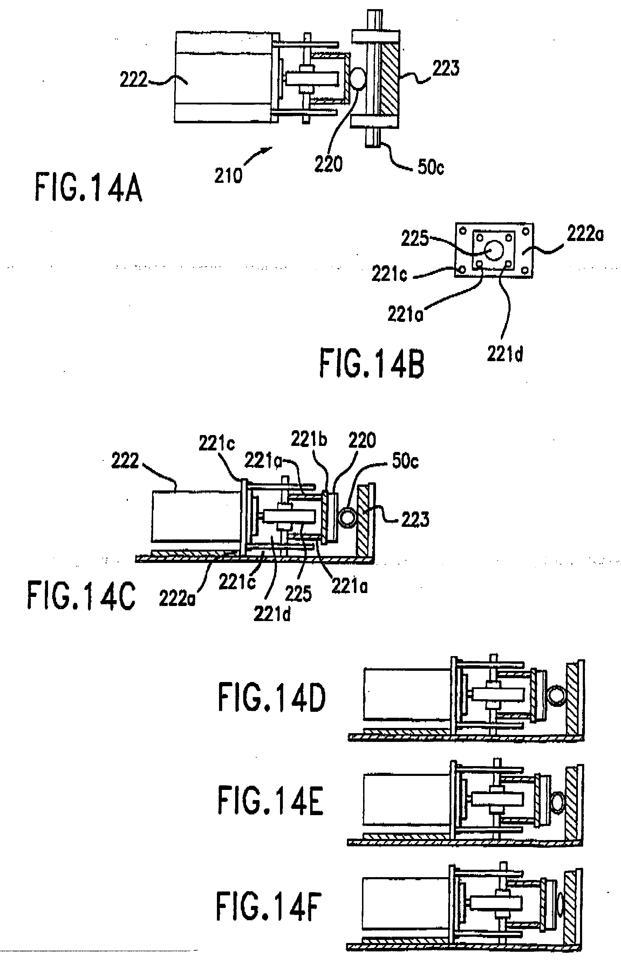

A stepping motor/cam valve 205 may be arranged on the tubing 50c to provide pulsatile delivery of the medical fluid to the organ 60, to decrease the pressure of the medical fluid fed into the organ 60, and/or to stop flow of medical fluid into the organ 60 if the perfusion pressure exceeds a predetermined amount. Specific embodiments of the stepping motor/cam valve are shown in Figs. 13A-13B and 14A-14F. Figs. 13A-13B show a stepping motor/rotational type cam valve.

Fig. 13A is a top view of the apparatus. Tubing, for example, tubing 50c, is interposed between a support 203 and cam 200. Cam 200 is connected by a rod 201 to stepping motor 202. Fig. 13B is a side view of the apparatus. The dashed line shows the rotational span of the cam 200. In Fig. 13B, the cam 200 is in its non-occluding position. Rotated 180 degrees, the cam 200 totally occludes the tubing 50c with varying degrees of occlusion therebetween. This stepping motor/cam valve is relatively fast, for example, with respect to the embodiment shown in Figs. 14A - 14F; however, it requires a strong stepping motor.

Figs. 14A - 14F disclose another stepping motor/cam valve 210. Fig. 14A is a side view of the apparatus while Fig. 14C is a top view. Tubing, for example, tubing 50c, is interposed between cam 220 and support 223. The cam 220 is connected to stepping motor 222 by supports 221a - 221d and helical screw 225, which is connected to the stepping motor 222 via plate 222a. Fig. 14B shows the supports 221a and plate 222a in front view. As show in Fig. 14D, where the support 221d is to the left of the center of the helical screw 225, the tubing 50c is not occluded. However, as the helical screw 225 is turned by the stepping motor 222, the support 221d moves to the left (with respect to Figs. 14D - 14F) toward a position where the cam 220 partially or fully occludes the tubing 50c. Such apparatus is slower than the apparatus of Figs. 13A - 13B, but is more energy efficient.

Medical fluid expelled from the organ 60 which has collected in the bottom of the bag 69 (the cassette 65 or the organ chamber 40) is either pumped out through tubing 81 by a pump 80 for filtration, passing through a filter unit 82 and being returned to the organ bath, or is pumped out by a pump 90 for circulation through tubing 91. The pumps 80,90 are preferably conventional roller pumps; however, other types of pumps may also be appropriate. A level sensor L2 in communication with the microprocessor 150 ensures that a predetermined level of effluent medical fluid is maintained within the organ chamber 40. A temperature sensor T1 disposed in the tubing 91 relays the temperature of the medical fluid pumped out of the organ bath along tubing 91 to the microprocessor 150, which monitors the same. A pressure sensor P2 disposed along the tubing 91 relays the pressure therein to the microprocessor 150, which shuts down the system if the fluid pressure in the tubing 91 exceeds a predetermined limit, or activates an alarm to notify the operator that the system should be shut down, for example, to clean filters or the like.

As the medical fluid is pumped along tubing 91 it passes through a filter unit 95 (e.g., 25µ, 8µ, 2µ, 0.8µ, 0.2µ and/or 0.1µ filters); a CO₂ scrubber/O₂ membrane 100 and an oxygenator 110, for example, a JOSTRA™ oxygenator. The CO₂ scrubber/O₂ membrane 100 is preferably a hydrophobic macroporous membrane with a hydrophilic (e.g., Hypol) coating in an enclosure. A vacuum source (not shown) is utilized to apply a low vacuum on a side opposite the hydrophilic coating by the activation of valve VV₁. A hydrostatic pressure of approximately 100 mm Hg is required for aqueous passage through the membrane. The mechanical relief valve (not shown) prevents the pressure differential from attaining this level. Immobilized pegolated carbonic anhydrase may be included in the hydrophilic coating. This allows bicarbonate to be converted to CO₂ and subsequently removed by vacuum venting. However, with organs such as kidneys which have the ability to eliminate bicarbonate, this may be unnecessary except in certain cases.

The oxygenator 110 is preferably a two stage oxygenator which preferably includes a hydrophilically coated low porosity oxygen permeable membrane. A portion of the medical fluid is diverted around the oxygenator along tubing 111 in which is disposed a viability sensor V1, which senses fluid characteristics, such as organ resistance (pressure/flow), pH, pO₂, pCO₂, LDH, T/GST and/or Tprotein, indicative of an organ's viability. The viability sensor V1 is in communication with the microprocessor 150 and allows the organ's viability to be assessed either automatically or manually. One of two gases, preferably 100% oxygen and 95/5% oxygen/carbon dioxide, is placed on the opposite side of the membrane depending on the pH level of the diverted medical fluid. Alternatively, another pump (not shown) may be provided which pumps effluent medical fluid out of the organ chamber 40 and through a viability sensor before returning it to the bath, or the viability sensor can be placed on tubing 81 utilizing pump 80.

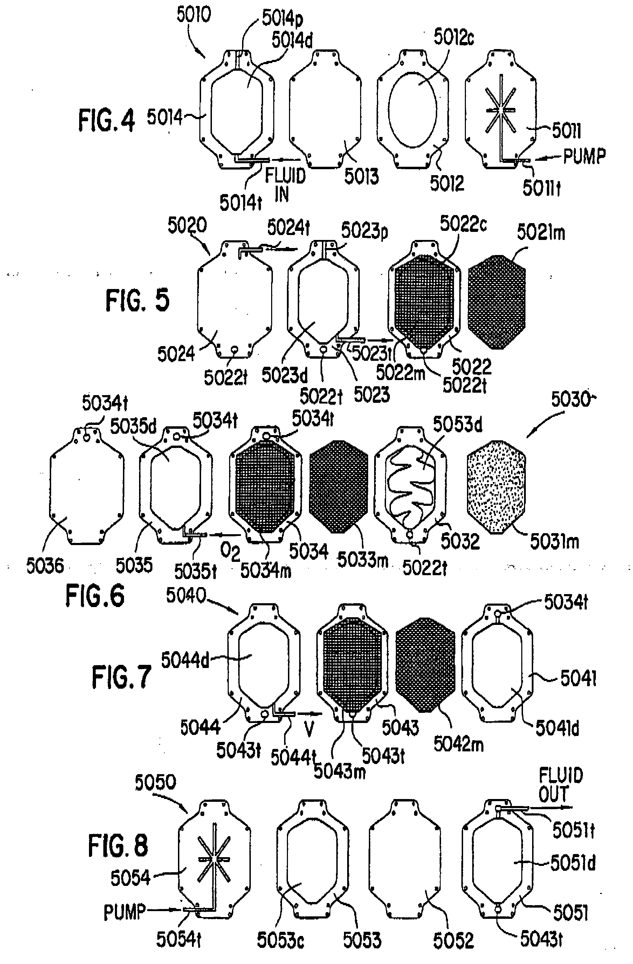

Alternative to the pump 90, filter unit 95, the CO₂ scrubber/O₂ membrane 100 and/or the oxygenator 110, a modular combined pump, filtration, oxygenation and/or debubbler apparatus may be employed such as that described in detail in simultaneously filed co-pending U.S. Patent Application No. 09/039,318, which is hereby incorporated by reference. As shown in Figs. 4 - 10, the apparatus 5001 is formed of stackable modules. The apparatus 5001 is capable of pumping a fluid through a system as well as oxygenating, filtering and/or debubbling the fluid. The modules are each formed of a plurality of stackable support members and are easily combinable to form a compact apparatus containing desired components. Filtration, oxygenation and/or degassing membranes are disposed between the support members.

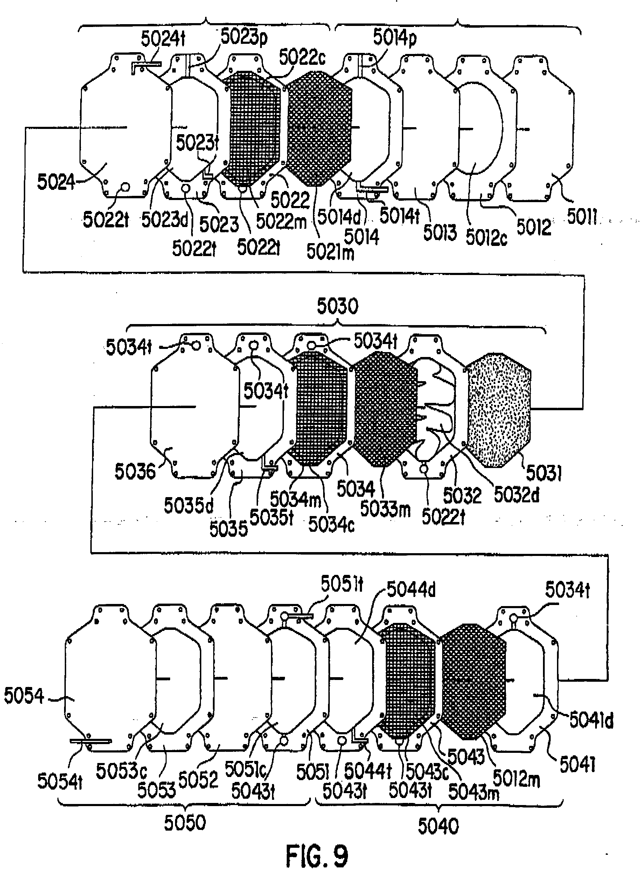

Figures 4-8 show various modules that may be stacked to form a combined pump, filtration, oxygenation and/or debubbler apparatus, such as the combined pump, filtration, oxygenation and debubbler apparatus 5001 shown in Figs. 9-10. As depicted in these figures, the combined pump, filtration, oxygenation and debubbler apparatus 5001 is preferably formed of a plurality of stackable support members groupable to form one or more modules.

Interposed between the plurality of stackable support member are filtration, oxygenation and/or degassing membranes depending on a particular user's needs. The filtration, oxygenation and/or degassing membranes are preferably commercially available macro-reticular hydrophobic polymer membranes hydrophilically grafted in a commercially known way, such as, for example, ethoxylation, to prevent protein deprivation, enhance biocompatibility with, for example, blood and to reduce clotting tendencies. The filtration membrane(s) is preferably hydrophilically grafted all the way through and preferably has a porosity (pore size) within a range of 15 to 35µ, more preferably 20 to 30µ, to filter debris in a fluid, preferably without filtering out cellular or molecular components of the fluid. The degassing membrane(s) and oxygenation membrane(s) are hydrophilically surface treated to maintain a liquid-gas boundary. The degassing membrane(s) and oxygenation membrane(s) preferably have a porosity of 15µ or less, more preferably 10µ or less.

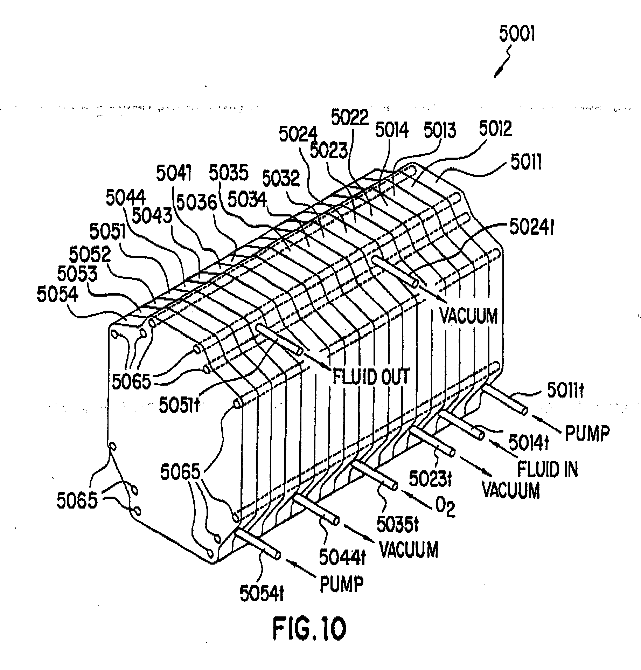

The modules may include a first pump module 5010, as shown in exploded view in Fig. 4; a filtration module 5020, as shown in exploded view in Fig. 5; an oxygenation module 5030, as shown in exploded view in Fig. 6; a debubbler module 5040, as shown in exploded view in Fig. 7; and a second pump module 5050, as shown in exploded view in Fig. 8. The pump modules are each connected to a source of pump fluid and are actuated either manually or by the microprocessor. The support members are preferably similarly shaped. For example, the support members may each be plate-shaped; however, other shapes may also be appropriate. As shown in Fig. 10, the support members are preferably removably connected by screws or bolts 5065; however, other fasteners for assembling the apparatus may also be appropriate.

The first pump module 5010 preferably includes a first (end) support member 5011, a second support member 5012 with a cut-out center area 5012c, a diaphragm 5013 and a third support member 5014. The support members of this module and each of the other modules are preferably thin and substantially flat (plate-like), and can be formed of any appropriate material with adequate rigidity and preferably also biocompatibility. For example, various resins and metals may be acceptable. A preferred material is an acrylic/polycarbonate resin.

The first (end) support member 5011 is preferably solid and provides support for the pump module 5010. The first (end) support member 5011 preferably includes a domed-out cavity for receiving pump fluid such as air. Tubing 5011t is provided to allow the pump fluid to enter the pump module 5010. The diaphragm 5013 may be made of any suitable elastic and preferably biocompatible material, and is preferably polyurethane. The third support member 5014 includes a domed-out fluid cavity 5014d and tubing 5014t for receiving fluid, such as, for example, blood or an artificial perfusate, into the cavity 5014d of the pump module 5010. The first pump module, or any of the other modules, may also include a port 5014p for sensors or the like. Preferably hemocompatible anti-backflow valves serve to allow unidirectional flow through the pump module 5010.

The filtration module 5020 preferably includes a filtration membrane 5021m which forms a boundary of cavity 5014d, a first support member 5022 with a cut-out center area 5022c, a degassing membrane 5022m and second and third support members 5023 and 5024. The filtration membrane 5021m is preferably a 25µ macro-reticular filtration membrane modified to enhance biocompatibility with, for example, blood and to reduce clotting tendencies (like the other supports, filters and membranes in the device). The degassing membrane 5022m is preferably a 0.2 - 3µ macro-reticular degassing membrane with a reverse flow aqueous pressure differential of at least 100 mmHg for CO₂ removal surface modified to enhance biocompatibility.

The first support 5022 includes tubing 5022t for forwarding fluid into the oxygenation module 30, or another adjacent module, if applicable, after it has passed through the filtration membrane 5021m and along the degassing membrane 5022m. The second support member 5023 of the filtration module 5020 includes a domed-out fluid cavity 5023d and tubing 5023t through which a vacuum may be applied to the cavity 5023d to draw gas out of the fluid through degassing membrane 5022m. The fourth support member 5024 is preferably solid and provides support for the filtration module 5020. The third support member can also include tubing 5024t through which a vacuum may be applied to draw gas out of the fluid through the degassing membrane 5031m of the oxygenation module 5030 as discussed below. The filtration module 5020, or any of the other modules, may also include a port 5023p for sensors or the like.

The oxygenation module 5030 includes a degassing membrane 5031m, a first support member 5032, a filtration membrane 5033m, an oxygenation membrane 5034m, a second support member 5034 with a cut-out center area 5034c, and third and fourth support members 5035, 5036, The degassing membrane 5031m is preferably a 0.2 - 3µ macro-reticular degassing membrane with a reverse flow aqueous pressure differential of at least 100 mmHg surface modified to enhance biocompatibility.

The first support member 5032 includes a domed-out fluid cavity 5032d. The surface of the domed-out fluid cavity 5032d preferably forms a tortuous path for the fluid, which enhances the oxygenation and degassing of the fluid. The filtration membrane 5033m is preferably a 25µ macro-reticular filtration membrane modified to enhance biocompatibility. The oxygenation membrane 5034m is preferably a 0.2 - 1µ macro-reticular oxygenation membrane with a reverse flow aqueous pressure differential of at least 100 mmHg surface modified to enhance biocompatibility.

The second support member 5034 includes tubing 5034t for forwarding fluid out of the oxygenation module 5030 into the debubbler module 5040, or another adjacent module, if applicable. The third support member 5035 includes a domed-out cavity 5035d and tubing 5035t for receiving oxygen from an external source. The fourth support member 5036 is preferably solid and provides support for the oxygenation module 5030.

The debubbler module 5040 includes a first support member 5041, a filtration membrane 5042m, a degassing membrane 5043m, a second support member 5043 having a cut-out center area 5043c, and a third support member 5044. The first support member 5041 has a domed-out fluid cavity 5041d.

The filtration membrane 5042m is preferably a 25µ macro-reticular filtration membrane modified to enhance biocompatibility. The degassing membrane 5043m is preferably a 0.2 - 3µ macro-reticular degassing membrane with a reverse flow aqueous pressure differential of at least 100 mmHg surface modified to enhance biocompatibility. The second support member 5043 has tubing 5043t for forwarding fluid out of the debubbler module 5040 into the pump module 5050, or another adjacent module, if applicable. The third support member 5044 includes a domed-out cavity 5044d and tubing 5044t through which a vacuum may be applied to draw gas out of the fluid through the degassing membrane 5043m.

The second pump module 5050 may correspond to the first pump module 5010. It preferably includes a first support member 5051, a diaphragm 5052, a second support member 5053 with a cut-out center area 5053c, and a third (end) support member 5054. The first support member 5051 includes a domed out fluid cavity 5051d and tubing 5051t for allowing fluid to exit the pump module. The diaphragm 5052 is preferably a polyurethane bladder.

The third (end) support piece member 5054 is preferably solid and provides support for the pump module 5050. Support member 5054 preferably includes a domed out cavity (not shown) for receiving pump fluid. Tubing 5054a is provided to allow the pump fluid such as air to enter the pump module 5050. Preferably hemocompatible anti-backflow valves may serve to allow unidirectional flow through the pump module 5050.

In operation, blood and/or medical fluid enters the first pump module 5010 through tube 5014t passes through the filtration membrane 5021m and along the degassing membrane 5022m. A small vacuum is applied through tubing 5023t to draw gas through the degassing membrane 5022m. Next, the blood and/or medical fluid travels into the oxygenation module 5030 via internal tubing 5022t, passing along the degassing membrane 5031m, through the filtration membrane 5033m and along the oxygenation membrane 5034m. Oxygen is received into the domed-out cavity 5035d of the third support member of the oxygenation module 5030 via tubing 5035t and passes through the oxygenation membrane 5034m into the blood and/or medical fluid as the blood and/or medical fluid travels along its surface.

After being oxygenated by the oxygenation module 5030, the blood and/or medical fluid then travels via internal tubing 5034t into the debubbler module 5040. The blood and/or medical fluid passes through the filtration membrane 5042m and along the degassing membrane 5043m. A small vacuum force is applied through tubing 5044t to draw gas out of the blood and/or medical fluid through the degassing membrane 5043m. After passing through the degassing module 5040, the blood and/or medical fluid travels into the second pump module 5050 through tubing 5041t, and exits the second pump module 5050 via tubing 5051t.

After passing through the oxygenator 110, or alternatively through the combined pump, oxygenation, filtration and/or degassing apparatus 5001, the recirculated medical fluid is selectively either directed to the reservoir 15a or 15b not in use along tubing 92a or 92b, respectively, by activating the respective valve LV₂ and LV₅ on the tubing 92a or 92b, or into the organ chamber 40 to supplement the organ bath by activating valve LV₁. Pressure sensors P3 and P4 monitor the pressure of the medical fluid returned to the bag 15a or 15b not in use. A mechanical safety valve MV₂ is provided on tubing 91 to allow for emergency manual cut off of flow therethrough. Also, tubing 96 and manual valve MV₁ are provided to allow the apparatus to be drained after use and to operate under a single pass mode in which perfusate exiting the organ is directed to waste rather than being recirculated (recirculation mode.)

A bicarbonate reservoir 130, syringe pump 131 and tubing 132, and an excretion withdrawal unit 120, in communication with a vacuum (not shown) via vacuum valve VV₂, and tubing 121a, 122a are also each provided adjacent to and in communication with the organ chamber 40.

The method preferably utilizes apparatus such as that discussed above to perfuse an organ to sustain, monitor and/or restore the viability of an organ and/or to transport and/or store the organ. Preservation of the viability of an organ is a key factor to a successful organ transplant. Organs for transplant are often deprived of oxygen (known as ischemia) for extended periods of time due to disease or injury to the donor body, during removal of the organ from the donor body and/or during storage and/or transport to a donee body. The method for perfusing focuses on three concepts in order to preserve an organ's viability prior to transplant of the organ into a donor body -- treating the cellular mitochondria to maintain and/or restore pre-ischemia energy and enzyme levels, preventing general tissue damage to the organ, and preventing the washing away of or damage to the vascular endothelial lining of the organ.

The mitochondria are the energy source in cells. They need large amounts of oxygen to function. When deprived of oxygen, their capacity to produce energy is reduced or inhibited. Additionally, at temperatures below 20 °C the mitochondria are unable to utilize oxygen to produce energy. By perfusing the organ with an oxygen rich medical fluid at normothermic temperatures, the mitochondria are provided with sufficient amounts of oxygen so that pre-ischemia levels of reserve high energy nucleotide, that is, ATP levels, in the organ reduced by the lack of oxygen are maintained and/or restored along with levels of enzymes that protect the organ's cells from free radical scavengers. Pyruvate rich solutions, such as that disclosed in U.S. Patent No. 5,066,578, are incapable of maintaining and/or restoring an organ's pre-ischemia energy levels and only function in the short term to raise the level of ATP a small amount. That is, organs naturally have significant pyruvate levels. Providing an organ with additional pyruvate will not assist in restoring and/or maintaining the organ's pre-ischemia energy levels if the mitochondria are not provided with sufficient oxygen to produce energy. Thus, the normothermic perfusion fluid may contain pyruvate but may also contain little or no pyruvate. For example, it can contain less than 6 mM of pyruvate, 5 mM, 4 mM, or even no pyruvate. Other known preservation solutions, such as that disclosed in U.S. Patent No. 5,599,659, also fail to contain sufficient oxygen to restore and/or maintain pre-ischmia energy and enzyme levels.

After maintaining and/or restoring the organ's pre-ischemia energy levels by perfusing the organ with an oxygen rich first medical fluid at normothermic or near-normothermic temperatures (the normothermic mode), the organ is perfused with a second medical fluid at hypothermic temperatures (the hypothermic mode). The hypothermic temperatures slow the organ's metabolism and conserve energy during storage and/or transport of the organ prior to introduction of the organ into a donee body. The medical fluid utilized in the hypothermic mode contains little or no oxygen, which cannot be utilized by mitochondria to produce energy below approximately 20°C. The medical fluid may include antioxidants and other tissue protecting agents, such as, for example, ascorbic acid, glutathione, water soluble vitamin E, catalase, or superoxide dismutase to protect against high free radical formation which occurs at low temperatures due to the reduction in catalase/superoxide dismutase production. Further, various drugs and agents such as hormones, vitamins, nutrients, antibiotics and others may be added to either solution where appropriate. Additionally, vasodilators, such as, for example, peptides, may be added to the medical fluid to maintain flow even in condition of injury.

Prior to normothermic perfusion with the oxygen rich first medical fluid at normothermic temperatures, the organ may be flushed with a medical solution containing little or no oxygen and preferably containing antioxidants. The flushing may be performed at either normothermic, near-normothermic or hypothermic temperatures.

The organ may be perfused at normothermic or near-normothermic temperatures to sustain, monitor and/or restore its viability prior to being perfused at hypothermic temperatures for storage and then may be transported without or preferably with hypothermic perfusion. Also, the normothermic perfusion may be performed in vivo prior to removal of the organ from the donor body. Further, the organ may be perfused at normothermic temperatures to sustain, monitor and/or restore its viability prior to being perfused at hypothermic temperatures preparatory to storage and/or transport. Then the organ may be transplanted into a donee body while remaining at hypothermic temperatures, or it may first be subjected to normothermic perfusion to help it recover from the effects of storage and/or transport. In the latter case, it may then be transplanted at normothermic temperatures, or preferably, be hypothermically perfused again for transplantation at hypothermic temperatures. After transplant, the organ may optionally again be perfused at normothermic temperatures in vivo, or allowed to warm up from the circulation of the donee.

The organ cassette allows an organ(s) to be easily transported to an organ recipient and/or between organ perfusion apparatus in a portable transport apparatus, such as, for example, a conventional cooler or a portable container such as that disclosed in co-pending U.S. Application No. 09/161,919. Because the organ cassette may be provided with openings to allow the insertion of tubing of an organ perfusion apparatus into the cassette for connection to an organ disposed therein, or may be provided with its own tubing and connection device or devices to allow connection to tubing from an organ perfusion apparatus and/or also with its own valve, it provides a protective environment for an organ for storage and/or transport while facilitating insertion of the organ into and/or connection of an organ to the tubing of an organ perfusion device. Further, the organ cassette may also include a handle to facilitate transport of the cassette and may be formed of a transparent material so the organ may be visually monitored.

Optionally, the apparatus may include a Global Positioning System (GPS) (not shown) to allow tracking of the location of the organ(s). The apparatus may also include a data logger and/or transmitter (not shown) to allow monitoring of the organ(s) at the location of the apparatus or at another location.

The method will be discussed below in terms of the operation of the apparatus shown in Fig. 2. However, other apparatus may be used to perform the method.

As previously discussed, the apparatus discussed above can operate in two modes: a normothermic perfusion mode and a hypothermic perfusion mode. The normothermic perfusion mode will be discussed first followed by a discussion of hypothermic perfusion mode. Repetitive description will be omitted.

In the normothermic or near-normothermic perfusion mode, an organ is perfused for preferably ½ to 6 hours, more preferably ½ to 4 hours, most preferably ½ to 1 hour, with a medical fluid maintained preferably within a range of approximately 15°C (for example, room temperature) to 38°C, more preferably 18°C to 35°C, most preferably 18°C to 25°C by the thermoelectric unit 30a disposed in heat exchange communication with the medical fluid reservoir 10.

As discussed above, in this mode, the medical fluid is preferably an oxygenated cross-linked hemoglobin-based bicarbonate solution. Cross-linked hemoglobin-based medical fluids can deliver up to 150 times more oxygen to an organ per perfusate volume than, for example, a simple University of Wisconsin (UW) gluconate type perfusate. This allows normothermic perfusion for one to two hours to partially or totally restore depleted ATP levels. Other preservation solutions, such as those disclosed in U.S. Patents Nos. 5,149,321, 5,234,405 and 5,395,314 and co-pending U.S. Patent Application No. 08/484,601, which are hereby incorporated by reference, may also be appropriate.

In the normothermic perfusion mode, the medical fluid is fed directly to an organ disposed within the organ chamber 40 from one or the other of bags 15a, 15b via tubing 50a,50b,50c or 50d,50e,50c, respectively. The organ is perfused at flow rates preferably within a range of approximately 3 to 5 ml/gram/min. Pressure sensor P1 relays the perfusion pressure to the microprocessor 150, which varies the pressure supplied by the pressure source 20 to control the perfusion pressure and/or displays the pressure on the control and display areas 5a for manual adjustment. The pressure is preferably controlled within a range of approximately 10 to 100 mm Hg, preferably 50 to 90 mm Hg, by the combination of the pressure source 20 and pressure cuff 15a, 15b in use and the stepping motor/cam valve 65. The compressor and cuffs provide gross pressure control. The stepping motor/cam valve 65, which is also controlled by the operator, or by the microprocessor 150 in response to signals from the pressure sensor P1, further reduces and fine tunes the pressure and/or puts a pulse wave on the flow into the organ 60. If the perfusion pressure exceeds a predetermined limit, the stepping motor/cam valve 65 may be activated to shut off fluid flow to the organ 60.

The specific pressures, flow rates and length of perfusion time at the particular temperatures will vary depending on the particular organ or organs being perfused. For example, hearts and kidneys are preferably perfused at a pressure of approximately 10 to 100 mm Hg and a flow rate of approximately 3 to 5 ml/gram/min. for up to approximately 2 to 4 hours at normothermic temperatures to maintain and/or restore the viability of the organ by restoring and/or maintaining pre-ischemia energy levels of the organ, and are then preferably perfused at a pressure of approximately 10 to 30 mm Hg and a flow rate of approximately 1 to 2 ml/gram/min. for as long as approximately 72 hours to 7 days at hypothermic temperatures for storage and/or transport. However, these criteria will vary depending on the condition of the particular organ, the donor body and/or the donee body and/or on the size of the particular organ. One of ordinary skill in the art can select appropriate conditions without undue experimentation in view of the guidance set forth herein.

Effluent medical fluid collects in the bottom of the organ chamber 40 and is maintained within a range of approximately 20°C to 38°C, preferably 25°C to 37°C, more preferably 25 to 35°C by the second thermoelectric unit 30b. The temperature sensor T2 relays the organ temperature to the microprocessor 150, which controls the thermoelectric unit 30a to adjust the temperature of the medical fluid and organ bath to maintain the organ 60 at the desired temperature, and/or displays the temperature on the control and display areas 5c for manual adjustment.

Collected effluent medical fluid is pumped out by the pump 80 via tubing 81 through the filter unit 82 and then returned to the organ bath. This filters out surgical and/or cellular debris from the effluent medical fluid and then returns filtered medical fluid to act as the bath for the organ 60. Once the level sensor L2 senses that a predetermined level of effluent medical fluid is present in the organ chamber 40 (preferably enough to maintain the organ 60 immersed in effluent medical fluid), additional effluent medical fluid is pumped out by the pump 90 through tubing 91. The temperature sensor T1 relays the temperature of the organ bath to the microprocessor 150, which controls the thermoelectric unit 30b to adjust the temperature of the medical fluid to maintain the organ 60 at the desired temperature and/or displays the temperature on the control and display area 5c for manual adjustment and monitoring.

As noted above, the medical fluid can be directed to waste in a single pass mode or recirculated eventually back to the organ and/or bath (recirculation mode.)

Along tubing 91, the recirculated medical fluid is first pumped through the filter unit 95. Use of a cross-linked hemoglobin medical fluid allows the use of submicron filtration to remove large surgical debris and cellular debris, as well as bacteria. This allows the use of minimal antibiotic levels, aiding in preventing organ damage such as renal damage.

Next, the recirculated medical fluid is pumped through the CO₂ scrubber/O₂ membrane 100. The medical fluid passes over the hydrophobic macroporous membrane with a hydrophilic coating (for example, Hypol) and a low vacuum is applied on the opposite side by activating valve VV₁ which removes CO₂ from the recirculated medical fluid.

Subsequently, a portion of the medical fluid then enters the oxygenator 110 (for example, a JOSTRA™ oxygenator) and a portion is diverted therearound passing via tubing 111 though the pH, pO₂, pCO₂, LDH, T/GST and Tprotein sensor V1. At this point two gases, preferably 100% oxygen and 95/5% oxygen/carbon dioxide, are respectively placed on the opposite sides of the membrane depending on the pH level of the diverted medical fluid. The gases are applied at a pressure of up to 200 mm Hg, preferably 50 to 100 mm Hg, preferably through a micrometer gas valve GV₃. The cross-linked hemoglobin-based bicarbonate medical fluid may be formulated to require a pCO₂ of approximately 40 mm Hg to be at the mid point (7.35) of a preferred pH range of 7.25-7.45.

If the medical fluid exiting the oxygenator is within the preferred pH range (e.g., 7.25-7.45), 100% oxygen is delivered to the gas exchange chamber, and valve LV₁ is then not opened, allowing the perfusate to return to the reservoir 10 into the bag 15a or 15b not in use. If the returning perfusate pH is outside the range on the acidic side (e.g., less than 7.25), 100% oxygen is delivered to the gas exchange chamber and valve LV₁ is then opened allowing the perfusate to return to the organ chamber 40. Actuation of syringe pump 131 pumps, for example, one cc of a bicarbonate solution from the bicarbonate reservoir 130, via tubing 132 into the organ bath. Medical fluids with high hemoglobin content provide significant buffering capacity. The addition of bicarbonate aids in buffering capacity and providing a reversible pH control mechanism.

If the returning perfusate pH is outside the range on the basic side (e.g., greater than 7.25), 95/5% oxygen/carbon dioxide is delivered to the gas exchange chamber and valve LV₁ is not actuated, allowing the perfusate to return to the bag 15a or 15b not in use. The bag 15a or 15b not in use is allowed to degas (e.g., any excess oxygen) through valve GV₄. When the bag 15a or 15b in use has approximately 250ml or less of medical fluid remaining therein, its respective cuff 16a, 16b is allowed to vent via its respective gas valve GV₁, GV₂. Then, the respective cuff 16a, 16b of the bag 15a or 15b previously not in use is supplied with gas from the compressed gas source 20 to deliver medical fluid to the organ to continue perfusion of the organ.

In the hypothermic mode, an organ is perfused with a cooled medical fluid, preferably at a temperature within a range of approximately 1°C to 15°C, more preferably 4 °C to 10 °C, most preferably around 10 °C. The medical fluid is preferably a crystalloid perfusate without oxygenation and preferably supplemented with antioxidants and other tissue protecting agents, such as, for example, ascorbic acid, glutathione, water soluble vitamin E, catalase, or superoxide dismutase.

Instead of feeding the medical fluid directly to the organ, the medical fluid may be fed from the reservoir tank 17 via tubing 51 into an intermediary tank 70 preferably having a pressure head of approximately 5 to 40 mm Hg, more preferably 10 to 30 mm Hg, most preferably around 20 mm Hg. Medical fluid is then fed by gravity from the intermediary tank 70 to the organ 60 along tubing 50c by activating a valve LV₆, The level sensor 71 in the intermediary tank 70 is used to control the feed from reservoir tank 17 to maintain the desired pressure head. Because the medical fluid is fed to the organ by gravity in the hypothermic mode, there is less perfusion pressure induced damage to the delicate microvasculature of the organ. In fact, the pressure at which the organ is perfused is limited by the pressure head to at most 40 mmHg.

The stepping motor/cam valve 205 may be arranged on the tubing 50c to provide pulsatile delivery of the medical fluid to the organ 60, to decrease the pressure of the medical fluid fed into the organ 60 for control purposes, or to stop flow of medical fluid into the organ 60, as described above.

Further, in the hypothermic mode, because the organ 60 has less of a demand for nutrients, the medical fluid may be provided to the organ 60 intermittently (e.g., every two hours at a flow rate of up to approximately 100 ml/min.), or at a slow continuous flow rate (e.g., up to approximately 100 ml/min.) over a long period of time. Intermittent perfusion can be implemented in the single pass mode or recirculation mode. The pump 80, filter unit 82 and tube 81 may be used to filter the organ bath along with use of the pH, pO₂, pCO₂, LDH, T/GST and Tprotein sensor; however, because the organ is unable to utilize oxygen at hypothermic temperatures, the oxygenator is not used.

Both the perfusate flow and the temperature regulation can be automatically controlled. Such automatic control allows a rapid and reliable response to perfusion conditions during operation. Automatic flow control can be based on the parameters measured from the system, including the perfusate flow rate, the perfusate pH exiting the organ, the organ inlet pressure or timed sequences such as pre-selected flow rates or switching between perfusate modes. Preferably, the flow control is based on pressure monitoring of the perfusate inflow into the organ. The benefits of automatic flow control include maintaining proper oxygenation and pH control while operating under continuous flow or controlled intermittent flow. Thermal control of the thermoelectric devices (TED) can regulate the temperature of the organ cassette or container and the perfusate reservoir. The thermal control is based on thermal measurements made for example by thermistor probes in the perfusate solution or inside the organ or by sensors in the TED.

The automatic control is preferably effected by an interactive control program using easily operated menu icons and displays. The parameters may be prestored for selection by a user or programmed by the user during operation of the system. The control program is preferably implemented on a programmed general purpose computer. However, the controller can also be implemented on a special purpose computer, a programmed microprocessor or microcontroller and peripheral integrated circuit elements, an ASIC or other integrated circuit, a digital signal processor, a hardwired electronic or logic circuit such as a discrete element circuit, a programmable logic device such as a PLD, PLA, FPGA or PAL, or the like. In general, any device capable of implementing a finite state machine that is in turn capable of implementing the control process described herein may be used. The control program is preferably implemented using a ROM. However, it may also be implemented using a PROM, an EPROM, an EEPROM, an optical ROM disk, such as a CD-ROM or DVD-ROM, and disk drive or the like. However, if desired, the control program may be employed using static or dynamic RAM. It may also be implemented using a floppy disk and disk drive, a writable optical disk and disk drive, a hard drive, flash memory or the like.

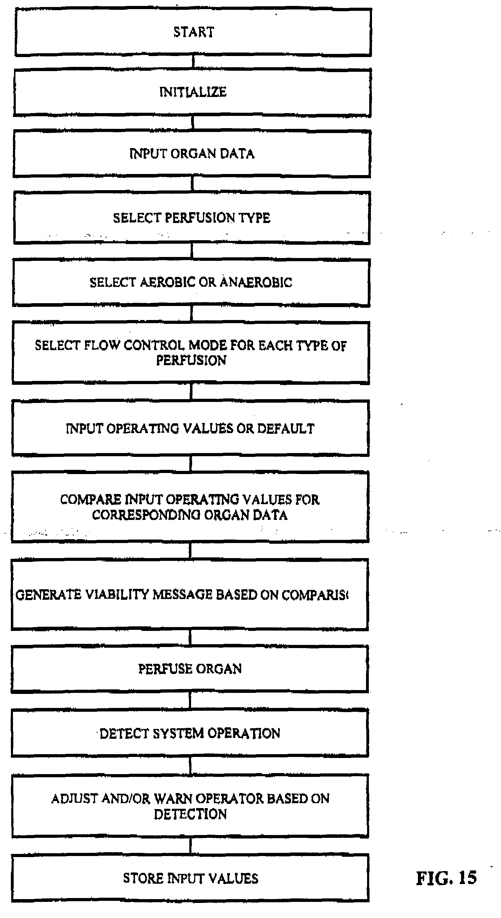

In operation, as seen in Fig. 15, the basic steps of operation to control perfusion of one or more organs include first inputting organ data. The organ data includes at least the type of organ and the mass. Then, the program will prompt the user to select one or more types of perfusion modes. The types of perfusion modes, discussed above, include hypothermic perfusion, normothermic perfusion, and sequential perfusion using both normothermic and hypothermic perfusion. When both normothermic and hypothermic perfusion are employed, the user can select between medical fluids at different temperatures. Of course, the system includes default values based on previously stored values appropriate for the particular organ. The user may also select intermittent perfusion, single pass perfusion, and recirculation perfusion. Depending on the type of perfusion selected, aerobic or anaerobic medical fluids may be specified.

Next, the type of flow control for each selected perfusion mode is set. The flow control selector selects flow control based on at least one of perfusate flow rate, perfusate pH, organ inlet pressure and timed sequences. In the preferred embodiment, the flow control is based on detected pressure at the perfusion inlet to the organ. The flow of the medical fluid is then based on the selected perfusion mode and flow control.

During operation the conditions experienced by the system, in particular by the organ and the perfusate, are detected and monitored. The detected operating conditions are compared with prestored operating conditions. A signal can then be generated indicative of organ viability based on the comparison. The various detectors, sensors and monitoring devices are described above, but include at least a pressure sensore a pH detector, an oxygen sensor and a flow meter.

The control system may also include a thermal controller for controlling temperature of at least one of the perfusate and the organ. The thermal controller can control the temperature of the medical fluid reservoirs and the organ container by controlling the TEDs. As noted above, temperature sensors are connected to the controller to facilitate monitoring and control.

The control system may be manually adjusted at any time or set to follow default settings. The system includes a logic circuit to prevent the operator from setting parameters that would compromise the organ's viability. As noted above, the system may also be operated in a manual mode for sequential hypothermic and/or normothermic perfusion, as well as in the computer controlled mode for sequential hypothermic and/or normothermic perfusion.

The above described apparatus and method may be used for child or small organs as well as for large or adult organs with modification as needed of the cassettes and or of the pressures and flow rates accordingly. As previously discussed, the organ cassette(s) can be configured to the shapes and sizes of specific organs or organ sizes. The apparatus and method can also be used to provide an artificial blood supply to, such, for example, artificial placentas cell cultures, for growing/cloning organ(s).

## Claims

1. A control system for controlling perfusion to at least one organ with a medical fluid to maintain viability of the at least one organ, comprising:
an input for inputting organ data specific to an organ being perfused;
a perfusion selector for selecting among at least two of a hypothermic perfusion mode, a normothermic perfusion mode, and a sequential normothermic and hypothermic perfusion mode;
a flow control selector for selecting a flow control based on (1) the perfusion mode selected by the perfusion selector and (2) at least one of perfusate flow rate, perfusate pH, organ inlet pressure, and timed sequences;
a controller for controlling flow of the medical fluid based on the selected perfusion mode and the selected flow control;
at least one detector for detecting operating conditions experienced by the medical fluid and the organ during perfusion;
a comparator for comparing the detected operating conditions with prestored operating conditions and generating a signal indicative of organ viability based on the comparison; and
an indicator for generating a message relating to the organ viability based on the signal generated by the comparator.

2. The control system of claim 1, wherein the flow control selector permits selection between aerobic and anaerobic perfusion for each selected perfusion mode.

3. The control system of claim 1, wherein the perfusion selector selects among a plurality of medical fluids at different temperatures.

4. The control system of claim 1, wherein the perfusion selector also selects from among intermittent perfusion and at least one of single pass perfusion and recirculation perfusion.

5. The control system of claim 1, wherein the at least one detector includes a pressure sensor, a pH detector, and an oxygen sensor.

6. The control system of claim 1, further comprising:
a thermal controller for controlling temperature of at least one of the medical fluid and the organ, and
a temperature sensor that outputs temperature readings to the thermal controller.

7. The control system of claim 6, further comprising an organ container and a perfusate reservoir, wherein the thermal controller regulates temperature of at least the organ container.

8. The control system of claim 1, wherein:
an operator can manually adjust the control system at any time or set the control system to follow default settings, and
the control system further includes a logic circuit to prevent the operator from setting parameters that would compromise the organ viability.

9. The control system of claim 1, wherein the perfusion selector and the flow control selector include default settings based on organ type.

10. The control system of claim 1, wherein the normothermic temperature ranges between 15°C and 38°C and the hypothermic temperature ranges between 1°C and 10°C.

11. The control system of claim 1, wherein the organ data includes data relating to organ type and organ mass.

12. The control system of claim 1, wherein the flow control is based on a measured parameter.

13. The control system of claim 1, wherein the perfusion selector selects from among all of the hypothermic perfusion mode, the normothermic perfusion mode, and the sequential normothermic and hypothermic perfusion mode.

14. A method of controlling perfusion of at least one organ with medical fluid, comprising:
inputting organ data specific to an organ being perfused;
selecting among at least two of a hypothermic perfusion mode, a normothermic perfusion mode, and a sequential normothermic and hypothermic perfusion mode;
selecting a flow control based on (1) the selected perfusion mode and (2) at least one of perfusate flow rate, perfusate pH, organ inlet pressure, and timed sequences;
controlling flow of the medical fluid based on the selected perfusion mode and the selected flow control;
detecting operating conditions experienced by the medical fluid and the organ during perfusion;
comparing the detected operating conditions with prestored operating conditions and generating a signal indicative of organ viability based on the comparison; and
generating a message relating to the organ viability based on the generated signal..

15. The method of claim 14, wherein selecting a flow control includes selecting between aerobic and anaerobic perfusion for each selected perfusion mode.

16. The method of claim 14, wherein selecting among at least two perfusion modes includes selecting among a plurality of medical fluids at different temperatures.

17. The method of claim 14, further comprising selecting among intermittent perfusion and at least one of single pass perfusion and recirculation perfusion.

18. The method of claim 14, wherein detecting operating conditions includes detecting pressure, pH, and oxygen levels.

19. The method of claim 14, further comprising controlling temperature of at least one of the medical fluid and the organ with a thermal controller.

20. The method of claim 19, wherein controlling the temperature includes regulating temperature of at least an organ container.

21. The method of claim 19, further comprising:
sensing a temperature of at least one of the organ, an organ container, and a perfusate reservoir, and
outputting temperature readings to the thermal controller.

22. The method of claim 20, further comprising setting default settings based on organ type for use in the steps of selecting perfusion mode and selecting flow control.

23. The method of claim 14, wherein the normothermic temperature ranges between 15°C and 38°C and the hypothermic temperature ranges between 1°C and 10°C.

24. The method of claim 14, wherein the organ data includes data relating to organ type and organ mass.

25. The method of claim 14, wherein the flow control is based on a measured parameter.

26. The method of claim 14, wherein selecting a perfusion mode includes selecting among all of the hypothermic perfusion mode, the normothermic perfusion mode, and the sequential normothermic and hypothermic perfusion mode.

27. A recording medium that stores a control program for use by a perfusion system that perfuses at least one organ with a medical fluid, the control program including instructions for:
inputting organ data specific to an organ being perfused;
selecting among at least two of a hypothermic perfusion mode, a normothermic perfusion mode, and a sequential normothermic and hypothermic perfusion mode;
selecting a flow control based on (1) the selected perfusion mode and (2) at least one of perfusate flow rate, perfusate pH, organ inlet pressure, and timed sequences;
controlling flow of the medical fluid based on the selected perfusion mode and the selected flow control;
detecting operating conditions experienced by the medical fluid and the organ during perfusion;
comparing the detected operating conditions with prestored operating conditions and generating a signal indicative of organ viability based on the comparison; and
generating a message relating to the organ viability based on the generated signal.

28. The recording medium of claim 27, wherein selecting a flow control includes selecting between aerobic and anaerobic perfusion for each selected perfusion mode.

29. The recording medium of claim 27, wherein selecting among at least two perfusion modes includes selecting among a plurality of medical fluids at different temperatures.

30. The recording medium of claim 27, wherein the control program further includes instructions for selecting among intermittent perfusion and at least one of single pass perfusion and recirculation perfusion.

31. The recording medium of claim 27, wherein detecting operating conditions includes detecting pressure, pH, and oxygen levels.

32. The recording medium of claim 27, further comprising controlling temperature of at least one of the medical fluid and the organ with a thermal controller.

33. The recording medium of claim 32, wherein controlling the temperature includes regulating temperature of at least an organ container.

34. The recording medium of claim 32, further comprising:
sensing a temperature of at least one of the organ, an organ container, and a perfusate reservoir, and
outputting temperature readings to the thermal controller.

35. The recording medium of claim 27, further comprising setting default settings based on organ type for use in the steps of selecting perfusion mode and selecting flow control.

36. The recording medium of claim 27, wherein the normothermic temperature ranges between 15°C and 38°C and the hypothermic temperature ranges between 1°C and 10°C.

37. The recording medium of claim 27, wherein the organ data includes data relating to organ type and organ mass.

38. The recording medium of claim 27, wherein the flow control is based on a measured parameter.

39. The recording medium of claim 27, wherein selecting a perfusion mode includes selecting among all of the hypothermic perfusion mode, the normothermic perfusion mode, and the sequential normothermic and hypothermic perfusion mode.

## Patentansprüche

1. Steuersystem zum Steuern der Perfusion mindestens eines Organs mit einem medizinischen Fluid zum Beibehalten der Lebensfähigkeit des mindestens einen Organs, umfassend:
eine Eingabe zum Eingeben von für das Perfusionsorgan spezifischen Daten;
einen Perfusionswähler zum Auswählen aus mindestens zwei eines hypothermischen Perfusionsmodus, eines normothermischen Perfusionsmodus und eines sequentiellen normothermischen und hypothermischen Perfusionsmodus;
einen Flusssteuerungswähler zum Auswählen einer Flusssteuerung, die auf (1) dem von dem Perfusionswähler ausgewählten Perfusionsmodus und (2) auf mindestens einer Perfusatflussrate, einem Perfusat-pH-Wert, einem Organeingangsdruck und getakteten Sequenzen basiert;
eine Steuerung zum Steuern des Flusses des medizinischen Fluids basierend auf dem ausgewählten Perfusionsmodus und der ausgewählten Flusssteuerung;
mindestens einen Detektor zum Erkennen von Betriebsbedingungen, die von dem medizinischen Fluid und dem Organ während der Perfusion erfahren werden;
einen Komparator zum Vergleichen der erkannten Betriebsbedingungen mit vorgespeicherten Betriebsbedingungen und zum Erzeugen eines Signals, das eine Organlebensfähigkeit basierend auf dem Vergleich anzeigt; und
einen Indikator zum Erzeugen einer Nachricht in Bezug auf die Organlebensfähigkeit basierend auf dem von dem Komparator erzeugten Signal.

2. Steuersystem nach Anspruch 1, wobei der Flusssteuerungswähler die Auswahl zwischen aerober und anaerober Perfusion für jeden ausgewählten Perfusionsmodus zulässt.

3. Steuersystem nach Anspruch 1, wobei der Perfusionswähler unter einer Vielzahl von medizinischen Fluida bei unterschiedlichen Temperaturen auswählt.

4. Steuersystem nach Anspruch 1, wobei der Perfusionswähler auch unter einer unterbrochenen Perfusion und mindestens einem von Einzeldurchgang-Perfusion und Rezirkulationsperfusion auswählt.

5. Steuersystem nach Anspruch 1, wobei der mindestens eine Detektor einen Drucksensor, einen pH-Detektor und einen Sauerstoffsensor umfasst.

6. Steuersystem nach Anspruch 1, ferner umfassend:
einen Wärmeregler zum Steuern der Temperatur mindestens eines von medizinischem Fluid und Organ, und
einen Temperatursensor, der Temperaturmesswerte des Wärmereglers ausgibt.

7. Steuersystem nach Anspruch 6, ferner umfassend einen Organbehälter und ein Perfusatreservoir, wobei der Wärmeregler die Temperatur von mindestens dem Organbehälter regelt.

8. Steuersystem nach Anspruch 1, wobei:
ein Bediener das Steuersystem jederzeit manuell einstellen kann oder das Steuersystem setzen kann, damit es den Standardeinstellungen folgt, und
das Steuersystem ferner eine logische Schaltung umfasst, um zu verhindern, dass der Bediener Parameter setzt, welche die Organlebensfähigkeit beeinträchtigen würden.

9. Steuersystem nach Anspruch 1, wobei der Perfusionswähler und der Flusssteuerungswähler Standardeinstellungen basierend auf dem Organtyp einschließen.

10. Steuersystem nach Anspruch 1, wobei die normothermische Temperatur im Bereich zwischen 15 °C und 38 °C und die hypothermische Temperatur in einem Bereich zwischen 1 °C und 10 °C liegt.

11. Steuersystem nach Anspruch 1, wobei die Organdaten Daten in Bezug auf den Organtyp und die Organmasse einschließen.

12. Steuersystem nach Anspruch 1, wobei die Flusssteuerung auf einem gemessenen Parameter basiert.

13. Steuersystem nach Anspruch 1, wobei der Perfusionswähler unter allen von hypothermischem Perfusionsmodus, normothermischem Perfusionsmodus und sequentiellem normothermischen und hypothermischen Perfusionsmodus wählt.

14. Verfahren zur Steuerung der Perfusion von mindestens einem Organ mit medizinischem Fluid, umfassend:
Eingeben von für das Perfusionsorgan spezifischen Daten;
Auswählen aus mindestens zwei eines hypothermischen Perfusionsmodus, eines normothermischen Perfusionsmodus und eines sequentiellen normothermischen und hypothermischen Perfusionsmodus;
Auswählen einer Flusssteuerung, die auf (1) dem ausgewählten Perfusionsmodus und (2) auf mindestens einer Perfusatflussrate, einem Perfusat-pH-Wert, einem Organeingangsdruck und getakteten Sequenzen basiert;
Steuern der Strömung des medizinischen Fluids basierend auf dem ausgewählten Perfusionsmodus und der ausgewählten Flusssteuerung;
Erkennen von Betriebsbedingungen, die von dem medizinischen Fluid und dem Organ während der Perfusion erfahren werden;
Vergleichen der erkannten Betriebsbedingungen mit vorgespeicherten Betriebsbedingungen und Erzeugen eines Signals, das die Organlebensfähigkeit basierend auf dem Vergleich anzeigt; und
Erzeugen einer Nachricht in Bezug auf die Organlebensfähigkeit basierend auf dem erzeugten Signal.

15. Verfahren nach Anspruch 14, wobei das Auswählen der Flusssteuerung das Auswählen zwischen aerober und anaerober Perfusion für jeden ausgewählten Perfusionsmodus einschließt.

16. Verfahren nach Anspruch 14, wobei das Auswählen zwischen zwei Perfusionsarten das Auswählen aus einer Vielzahl von medizinischen Fluida bei unterschiedlichen Temperaturen einschließt.

17. Verfahren nach Anspruch 14, ferner umfassend das Auswählen aus unterbrochener Perfusion und mindestens einem von Einzeldurchgang-Perfusion und Rezirkulationsperfusion.

18. Verfahren nach Anspruch 14, wobei das Erkennen der Betriebsbedingungen das Erkennen von Druck, pH-Wert und SauerstoffpegeIn einschließt.

19. Verfahren nach Anspruch 14, ferner umfassend das Steuern der Temperatur von mindestens einem von medizinischem Fluid und Organ mit einem Wärmeregler.

20. Verfahren nach Anspruch 19, wobei das Steuern der Temperatur das Regeln der Temperatur mindestens eines Organbehälters einschließt.

21. Verfahren nach Anspruch 19, ferner umfassend:
Erfassen einer Temperatur von mindestens einem von Organ, Organbehälter und Perfusatreservoir, und
Ausgeben von Temperaturauslesungen des Wärmereglers.

22. Verfahren nach Anspruch 20, ferner umfassend das Setzen von Standardeinstellungen basierend auf dem Organtyp für die Verwendung in den Schritten des Auswählens des Perfusionsmodus und des Auswählens der Flusssteuerung.

23. Verfahren nach Anspruch 14, wobei die normothermische Temperatur in einem Bereich zwischen 15 °C und 38 °C und die hypothermische Temperatur in einem Bereich zwischen 1 °C und 10 °C liegt.

24. Verfahren nach Anspruch 14, wobei die Organdaten Daten in Bezug auf den Organtyp und die Organmasse einschließen.

25. Verfahren nach Anspruch 14, wobei die Flusssteuerung auf einem gemessenen Parameter basiert.

26. Verfahren nach Anspruch 14, wobei das Auswählen eines Perfusionsmodus das Auswählen aus allen von hypothermischem Perfusionsmodus, normothermischem Perfusionsmodus und sequentiellem normothermischen und hypothermischen Perfusionsmodus einschließt.

27. Aufzeichnungsmedium, das ein Steuerungsprogramm zur Verwendung durch ein Perfusionssystem zum Perfundieren mindestens eines Organs mit einem medizinischen Fluid speichert, wobei das Steuerungsprogramm die folgenden Anweisungen einschließt:
Eingeben von für das Perfusionsorgan spezifischen Daten;
Auswählen aus mindestens zwei eines hypothermischen Perfusionsmodus, eines normothermischen Perfusionsmodus und eines sequentiellen normothermischen und hypothermischen Perfusionsmodus;
Auswählen einer Flusssteuerung, die auf (1) dem ausgewählten Perfusionsmodus und (2) auf mindestens einer Perfusatflussrate, einem Perfusat-pH-Wert, einem Organeingangsdruck und getakteten Sequenzen basiert;
Steuern der Strömung des medizinischen Fluids basierend auf dem ausgewählten Perfusionsmodus und der ausgewählten Flusssteuerung;
Erkennen von Betriebsbedingungen, die von dem medizinischen Fluid und dem Organ während der Perfusion erfahren werden;
Vergleichen der erkannten Betriebsbedingungen mit vorgespeicherten Betriebsbedingungen und Erzeugen eines Signals, das die Organlebensfähigkeit basierend auf dem Vergleich anzeigt; und
Erzeugen einer Nachricht in Bezug auf die Organlebensfähigkeit basierend auf dem erzeugten Signal.

28. Aufzeichnungsmedium nach Anspruch 27, wobei das Auswählen der Flusssteuerung das Auswählen zwischen aerober und anaerober Perfusion für jeden ausgewählten Perfusionsmodus einschließt.

29. Aufzeichnungsmedium nach Anspruch 27, wobei das Auswählen zwischen zwei Perfusionsarten das Auswählen aus einer Vielzahl von medizinischen Fluida bei unterschiedlichen Temperaturen einschließt.

30. Aufzeichnungsmedium nach Anspruch 27, wobei das Steuerungsprogramm ferner Anweisungen zum Auswählen aus einer unterbrochenen Perfusion und mindestens einem von Einzeldurchgang-Perfusion und Rezirkulationsperfusion einschließt.

31. Aufzeichnungsmedium nach Anspruch 27, wobei das Erkennen der Betriebsbedingungen das Erkennen von Druck, pH-Wert und Sauerstoffpegeln einschließt.

32. Aufzeichnungsmedium nach Anspruch 27, ferner umfassend das Steuern der Temperatur von mindestens einem von medizinischem Fluid und Organ mit einem Wärmeregler.

33. Aufzeichnungsmedium nach Anspruch 32, wobei das Steuern der Temperatur das Regeln der Temperatur mindestens eines Organbehälters einschließt.

34. Aufzeichnungsmedium nach Anspruch 32, ferner umfassend:
Erfassen einer Temperatur von mindestens einem von Organ, Organbehälter und Perfusatreservoir, und
Ausgeben von Temperaturauslesungen des Wärmereglers.

35. Aufzeichnungsmedium nach Anspruch 27, ferner umfassend das Setzen von Standardeinstellungen basierend auf dem Organtyp für die Verwendung in den Schritten des Auswählens des Perfusionsmodus und des Auswählens der Flusssteuerung.

36. Aufzeichnungsmedium nach Anspruch 27, wobei die normothermische Temperatur in einem Bereich zwischen 15 °C und 38 °C und die hypothermische Temperatur zwischen 1 °C und 10 °C liegt.

37. Aufzeichnungsmedium nach Anspruch 27, wobei die Organdaten Daten in Bezug auf den Organtyp und die Organmasse einschließen.

38. Aufzeichnungsmedium nach Anspruch 27, wobei die Flusssteuerung auf einem gemessenen Parameter basiert.

39. Aufzeichnungsmedium nach Anspruch 27, wobei das Auswählen eines Perfusionsmodus das Auswählen aus allen von hypothermischem Perfusionsmodus, normothermischem Perfusionsmodus und sequentiellem normothermischen und hypothermischen Perfusionsmodus einschließt.

## Revendications

1. Système de commande pour commander la perfusion d'au moins un organe avec un fluide médical pour maintenir la viabilité de l'au moins un organe, comprenant :
une entrée pour introduire des données relatives à l'organe spécifiques à un organe qui est perfusé ;
un sélecteur de perfusion pour sélectionner entre au moins deux modes parmi un mode de perfusion hypothermique, un mode de perfusion normothermique, et un mode de perfusion séquentielle normothermique et hypothermique ;
un sélecteur de commande de flux pour sélectionner une commande de flux sur la base (1) du mode de perfusion sélectionné par le sélecteur de perfusion et (2) d'au moins l'un(e) du débit de liquide de perfusion, du pH de liquide de perfusion, de la pression d'entrée à l'organe, et de séquences temporisées ;
une unité de commande pour commander le flux du fluide médical sur la base du mode de perfusion sélectionné et de la commande de flux sélectionnée ;
au moins un détecteur pour détecter les conditions de fonctionnement subies par le fluide médical et l'organe pendant la perfusion ;
un comparateur pour comparer les conditions de fonctionnement détectées à des conditions de fonctionnement préenregistrées et pour générer un signal indiquant la viabilité de l'organe sur la base de la comparaison ; et
un indicateur pour générer un message relatif à la viabilité de l'organe sur la base du signal généré par le comparateur.

2. Système de commande de la revendication 1, dans lequel le sélecteur de commande de flux permet la sélection entre une perfusion aérobie et une perfusion anaérobie pour chaque mode de perfusion sélectionné.

3. Système de commande de la revendication 1, dans lequel le sélecteur de perfusion sélectionne parmi une pluralité de fluides médicaux à différentes températures.

4. Système de commande de la revendication 1, dans lequel le sélecteur de perfusion sélectionne également parmi une perfusion intermittente et au moins l'une d'une perfusion à passage unique et d'une perfusion de recirculation.

5. Système de commande de la revendication 1, dans lequel l'au moins un détecteur comporte un capteur de pression, un détecteur de pH et un capteur d'oxygène.

6. Système de commande de la revendication 1, comprenant en outre :
une unité de commande thermique pour commander la température d'au moins l'un du fluide médical et de l'organe, et
un capteur de température qui délivre en sortie les lectures de température à l'unité de commande thermique.

7. Système de commande de la revendication 6, comprenant en outre un récipient d'organe et un réservoir de liquide de perfusion, où l'unité de commande thermique régule la température d'au moins le récipient d'organe.

8. Système de commande de la revendication 1, dans lequel :
un opérateur peut ajuster manuellement le système de commande à tout moment ou régler le système de commande pour suivre des réglages par défaut, et
le système de commande comporte en outre un circuit logique pour empêcher l'opérateur de régler des paramètres qui compromettraient la viabilité de l'organe.

9. Système de commande de la revendication 1, dans lequel le sélecteur de perfusion et le sélecteur de commande de flux comportent des réglages par défaut sur la base du type d'organe.

10. Système de commande de la revendication 1, dans lequel la température normothermique est comprise entre 15°C et 38°C et la température hypothermique est comprise entre 1°C et 10°C.

11. Système de commande de la revendication 1, dans lequel les données relatives à l'organe incluent des données relatives au type d'organe et à la masse d'organe.

12. Système de commande de la revendication 1, dans lequel la commande de flux est basée sur un paramètre mesuré.

13. Système de commande de la revendication 1, dans lequel le sélecteur de perfusion sélectionne entre tous les modes parmi le mode de perfusion hypothermique, le mode de perfusion normothermique, et le mode de perfusion séquentielle normothermique et hypothermique.

14. Procédé de commande de la perfusion d'au moins un organe avec un fluide médical, comprenant le fait :
d'introduire des données relatives à l'organe spécifiques à un organe qui est perfusé ;
de sélectionner entre au moins deux modes parmi un mode de perfusion hypothermique, un mode de perfusion normothermique, et un mode de perfusion séquentielle normothermique et hypothermique ;
de sélectionner une commande de flux sur la base (1) du mode de perfusion sélectionné et (2) d'au moins l'un(e) du débit de liquide de perfusion, du pH de liquide de perfusion, de la pression d'entrée à l'organe, et de séquences temporisées ;
de commander le flux du fluide médical sur la base du mode de perfusion sélectionné et de la commande de flux sélectionnée ;
de détecter les conditions de fonctionnement subies par le fluide médical et l'organe pendant la perfusion ;
de comparer les conditions de fonctionnement détectées à des conditions de fonctionnement préenregistrées et de générer un signal indiquant la viabilité de l'organe sur la base de la comparaison ; et
de générer un message relatif à la viabilité de l'organe sur la base du signal généré.

15. Procédé de la revendication 14, dans lequel le fait de sélectionner une commande de flux comporte la sélection entre une perfusion aérobie et une perfusion anaérobie pour chaque mode de perfusion sélectionné.

16. Procédé de la revendication 14, dans lequel le fait de sélectionner parmi au moins deux modes de perfusion comporte la sélection parmi une pluralité de fluides médicaux à différentes températures.

17. Procédé de la revendication 14, comprenant en outre le fait de sélectionner parmi une perfusion intermittente et au moins l'une d'une perfusion à passage unique et d'une perfusion de recirculation.

18. Procédé de la revendication 14, dans lequel le fait de détecter les conditions de fonctionnement comporte la détection des niveaux de pression, de pH et d'oxygène.

19. Procédé de la revendication 14, comprenant en outre le fait de commander la température d'au moins l'un du fluide médical et de l'organe avec une unité de commande thermique.

20. Procédé de la revendication 19, dans lequel le fait de commander la température comporte la régulation de la température d'au moins un récipient d'organe.

21. Procédé de la revendication 19, comprenant en outre le fait :
de détecter une température d'au moins l'un de l'organe, d'un récipient d'organe, et d'un réservoir de liquide de perfusion, et
de délivrer en sortie des lectures de température à l'unité de commande thermique.

22. Procédé de la revendication 20, comprenant en outre le fait de régler des réglages par défaut sur la base du type d'organe pour une utilisation dans les étapes de sélection de mode de perfusion et de sélection de commande de flux.

23. Procédé de la revendication 14, dans lequel la température normothermique est comprise entre 15°C et 38°C et la température hypothermique est comprise entre 1°C et 10°C.

24. Procédé de la revendication 14, dans lequel les données relatives à l'organe incluent des données relatives au type d'organe et à la masse d'organe.

25. Procédé de la revendication 14, dans lequel la commande de flux est basée sur un paramètre mesuré.

26. Procédé de la revendication 14, dans lequel le fait de sélectionner un mode de perfusion comporte la sélection entre tous les modes parmi le mode de perfusion hypothermique, le mode de perfusion normothermique, et le mode de perfusion séquentielle normothermique et hypothermique.

27. Support d'enregistrement qui stocke un programme de commande pour une utilisation par un système de perfusion qui effectue la perfusion d'au moins un organe avec un fluide médical, le programme de commande comportant des instructions :
pour introduire des données relatives à l'organe spécifiques à un organe qui est perfusé ;
pour sélectionner entre au moins deux modes parmi un mode de perfusion hypothermique, un mode de perfusion normothermique, et un mode de perfusion séquentielle normothermique et hypothermique ;
pour sélectionner une commande de flux sur la base (1) du mode de perfusion sélectionné et (2) d'au moins l'un(e) du débit de liquide de perfusion, du pH de liquide de perfusion, de la pression d'entrée à l'organe, et de séquences temporisées ;
pour commander le flux du fluide médical sur la base du mode de perfusion sélectionné et de la commande de flux sélectionnée ;
pour détecter les conditions de fonctionnement subies par le fluide médical et l'organe pendant la perfusion ;
pour comparer les conditions de fonctionnement détectées à des conditions de fonctionnement préenregistrées et pour générer un signal indiquant la viabilité de l'organe sur la base de la comparaison ; et
pour générer un message relatif à la viabilité de l'organe sur la base du signal généré.

28. Support d'enregistrement de la revendication 27, dans lequel le fait de sélectionner une commande de flux comporte la sélection entre une perfusion aérobie et une perfusion anaérobie pour chaque mode de perfusion sélectionné.

29. Support d'enregistrement de la revendication 27, dans lequel le fait de sélectionner parmi au moins deux modes de perfusion comporte la sélection parmi une pluralité de fluides médicaux à différentes températures.

30. Support d'enregistrement de la revendication 27, dans lequel le programme de commande comporte en outre des instructions pour sélectionner parmi une perfusion intermittente et au moins l'une d'une perfusion à passage unique et d'une perfusion de recirculation.

31. Support d'enregistrement de la revendication 27, dans lequel le fait de détecter les conditions de fonctionnement comporte la détection des niveaux de pression, de pH, et d'oxygène.

32. Support d'enregistrement de la revendication 27, comprenant en outre le fait de commander la température d'au moins l'un du fluide médical et de l'organe avec une unité de commande thermique.

33. Support d'enregistrement de la revendication 32, dans lequel le fait de commander la température comporte la régulation de la température d'au moins un récipient d'organe.

34. Support d'enregistrement de la revendication 32, comprenant en outre le fait :
de détecter une température d'au moins l'un de l'organe, d'un récipient d'organe, et d'un réservoir de liquide de perfusion, et
de délivrer en sortie des lectures de température à l'unité de commande thermique.

35. Support d'enregistrement de la revendication 27, comprenant en outre le fait de régler des réglages par défaut sur la base du type d'organe pour une utilisation dans les étapes de sélection de mode de perfusion et de sélection de commande de flux.

36. Support d'enregistrement de la revendication 27, dans lequel la température normothermique est comprise entre 15°C et 38°C et la température hypothermique est comprise entre 1°C et 10°C.

37. Support d'enregistrement de la revendication 27, dans lequel les données relatives à l'organe incluent des données relatives au type d'organe et à la masse d'organe.

38. Support d'enregistrement de la revendication 27, dans lequel la commande de flux est basée sur un paramètre mesuré.

39. Support d'enregistrement de la revendication 27, dans lequel le fait de sélectionner un mode de perfusion comporte la sélection entre tous les modes parmi le mode de perfusion hypothermique, le mode de perfusion normothermique, et le mode de perfusion séquentielle normothermique et hypothermique.
